# EUROPEAN PATENT SPECIFICATION

(11) **EP 3 847 641 B1**
(45) Date of publication and mention of the grant of the patent: **24.09.2025**
(21) Application number: 19877160.2
(22) Date of filing: 23.10.2019
(51) Int. Cl.: G06F 16/3329, G10L 15/18, G10L 15/30, G10L 15/32, G06F 16/9032, G10L 15/22

(54) **ELECTRONIC DEVICE AND SYSTEM WHICH PROVIDES SERVICE BASED ON VOICE RECOGNITION**
ELEKTRONISCHE VORRICHTUNG UND SYSTEM BASIEREND AUF SPRACHERKENNUNG
DISPOSITIF ÉLECTRONIQUE ET SYSTÈME QUI FOURNISSENT UN SERVICE SUR LA BASE D'UNE RECONNAISSANCE VOCALE

(30) Priority: 23.10.2018 KR 20180126894
(43) Date of publication of application: 14.07.2021
(73) Proprietor: Samsung Electronics Co., Ltd., Suwon-si, Gyeonggi-do 16677 (KR)
(72) Inventor: HA, Jeehun, Suwon-si, Gyeonggi-do 16677 (KR); AN, Yuhyun, Suwon-si, Gyeonggi-do 16677 (KR)
(74) Representative: Arnold & Siedsma
(86) International application number: PCT/KR2019/013949
(87) International publication number: WO 2020/085784

(56) References cited:
- KR-A- 20180 084 392
- KR-A- 20180 084 394
- KR-A- 20180 110 976
- US-A1- 2009 313 016
- US-A1- 2017 140 761
- US-A1- 2018 210 703
- US-B1- 9 123 339

## Description

### Technical Field

The disclosure relates to a technology for providing a voice recognition service.

### Background Art

As the electronic device has various functions and high-performance, the voice recognition technology is being increasingly applied to the electronic device. The electronic device to which the voice recognition technology is applied may identify a user's intent (function request) based on a user utterance and may provide the response according to the user's intent. When receiving a wake-up utterance (e.g., "Hi Bixby") or a button input, the electronic device may execute a specified application (an intelligent app) or an intelligent assistance service providing a voice recognition service, may receive a user utterance through the specified application, and may terminate the specified application after providing a single response according to a user's intent based on the user utterance. Afterward, the electronic device needs to receive the wake-up utterance or the button input again to provide the voice recognition service. US2009/313016A1 discloses a method and system for detecting repeated patterns in dialog systems.

The above information is presented as background information only to assist with an understanding of the disclosure. No determination has been made, and no assertion is made, as to whether any of the above might be applicable as prior art with regard to the disclosure.

### Disclosure of Invention

### Technical Problem

Accordingly, for the purpose of making a request for a plurality of functions by using a voice recognition service, it is inconvenient for a user to need to repeatedly execute a wake-up utterance (or a button input) and a user utterance alternately.

### Solution to Problem

In accordance with an aspect of the disclosure, an electronic device as defined in claim 1 is provided.

### Advantageous Effects of Invention

Aspects of the disclosure are to address at least the above-mentioned problems and/or disadvantages and to provide at least the advantages described below. Accordingly, an aspect of the disclosure is to provide an electronic device and a system that provides a voice recognition service capable of providing a plurality of responses respectively corresponding to a plurality of user utterances after one wake-up utterance.

### Brief Description of Drawings

The invention is solely defined by the appended claims. The above and other aspects, features, and advantages of certain embodiments of the disclosure will be more apparent from the following description taken in conjunction with the accompanying drawings, in which:
FIG. 1 is a configuration diagram of an integrated intelligence system, according to an embodiment;
FIG. 2 is a block diagram of an electronic device, according to an embodiment;
FIG. 3a illustrates operating modes for a voice recognition service of an electronic device in the case where the use of a dialog mode is not set, according to an embodiment;
FIG. 3b illustrates an example of a voice recognition service in the case where the use of a dialog mode is not set, according to an embodiment;
FIG. 4a illustrates operating modes for a voice recognition service of an electronic device in the case where the use of a dialog mode is set, according to an embodiment;
FIG. 4b illustrates an example of a voice recognition service in the case where the use of a dialog mode is set, according to an embodiment;
FIG. 5a illustrates a UI screen for setting the use of a dialog mode, according to an embodiment;
FIG. 5b illustrates a UI screen for setting the time of a dialog mode, according to an embodiment;
FIG. 5c illustrates an example of a UI screen for setting a trigger word of a dialog mode, according to an embodiment;
FIG. 5d illustrates another example of a UI screen for setting a trigger word of a dialog mode, according to an embodiment;
FIG. 6 illustrates an example of components of a processor, according to an embodiment;
FIG. 7 illustrates another example of components of a processor, according to an embodiment;
FIG. 8 illustrates a voice recognition service providing method by an integrated intelligence system, according to an embodiment;
FIG. 9 illustrates a voice recognition service providing method by an electronic device, according to an embodiment;
FIG. 10 illustrates a block diagram of an electronic device in a network environment, according to various embodiments;
FIG. 11 is a block diagram illustrating an integrated intelligence system, according to an embodiment;
FIG. 12 is a diagram illustrating the form in which relationship information between a concept and an action is stored in a database, according to an embodiment; and
FIG. 13 is a view illustrating a user terminal displaying a screen of processing a voice input received through an intelligent app, according to an embodiment.

### Mode for the Invention

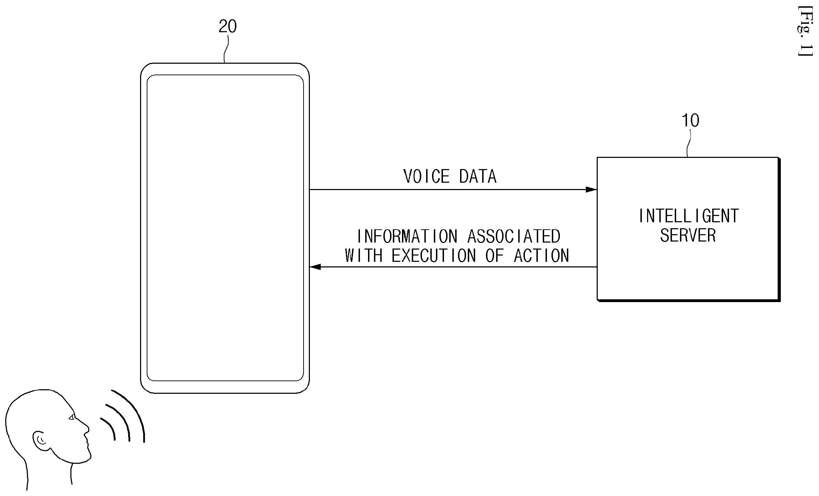

FIG. 1 is a configuration diagram of an integrated intelligence system, according to an embodiment.

Referring to FIG. 1, according to an embodiment, when receiving a wake-up utterance (e.g., Hi Bixby) through a microphone, an electronic device 20 executes an intelligent app (or intelligent agent) or an intelligent assistance service providing a voice recognition service. The wake-up utterance may include a specific word, a specific phrase, or a specific sentence, and may be an utterance having a specific user's acoustic characteristics (e.g., specific frequency characteristics). According to various embodiments, in the case where the electronic device 20 includes an input circuit (e.g., a touch sensor or a physical button), the electronic device 20 may execute an intelligent app or an intelligent assistance service, when the electronic device 20 identifies a specified input (e.g., a touch or a press) through an input circuit.

According to an embodiment, when receiving a first user utterance (voice input) through a microphone, the intelligent app or the intelligent assistance service of the electronic device 20 performs an action according to a user's intent based on the first user utterance. For example, when receiving the first user utterance, the intelligent app or the intelligent assistance service of the electronic device 20 may convert the first user utterance into first voice data (e.g., pulse code modulation (PCM) data) and may transmit the first voice data to an intelligent server 10. When receiving the first voice data, the intelligent server 10 may convert the first voice data into text data and may determine the user's intent based on the converted text data. The intelligent server 10 may determine a first action according to the determined intent of the user, may generate information associated with the execution of the determined first action, and may transmit the generated information associated with the execution of the first action to the electronic device 20. For example, the information associated with the execution of the first action may include the information of an application performing the first action and function information executed by the corresponding application. When receiving the information associated with the first action from the intelligent server 10, the electronic device 20 may perform a first action corresponding to a first user utterance based on information associated with the execution of the first action by the intelligent app or the intelligent assistance service. The electronic device 20 may output a first sound associated with the execution of the first action, while the first action is performed or when the execution of the first action is completed. For example, the first sound associated with the execution of the first action may be the sound provided from the intelligent server 10 or may be the sound generated by the electronic device 20 based on the information associated with the first action. For example, the first sound associated with the execution of the first action may be the sound guiding a procedure of performing the first action or the sound guiding the result of performing the first action.

According to an embodiment, the intelligent app or the intelligent assistance service of the electronic device 20 may determine whether a trigger word is recognized, based on the second user utterance received through a microphone within the selected time from a point in time when the execution of the first action is completed. When the trigger word is recognized based on the second user utterance received within the selected time from a point in time when the execution of the first action is completed, the intelligent app or the intelligent assistance service of the electronic device 20 performs the second action determined based on the sentence including the trigger word. On the other hand, when the trigger word is not recognized based on the second user utterance within the selected time from a point in time when the execution of the first action is completed, the intelligent app or the intelligent assistance service of the electronic device 20 may be terminated.

According to the above-described embodiment, the electronic device 20 may perform a plurality of actions respectively corresponding to a plurality of user utterances through one attempt (e.g., a wake-up utterance or a specified input) to execute the intelligent app or the intelligent assistance service (or to call the voice recognition service).

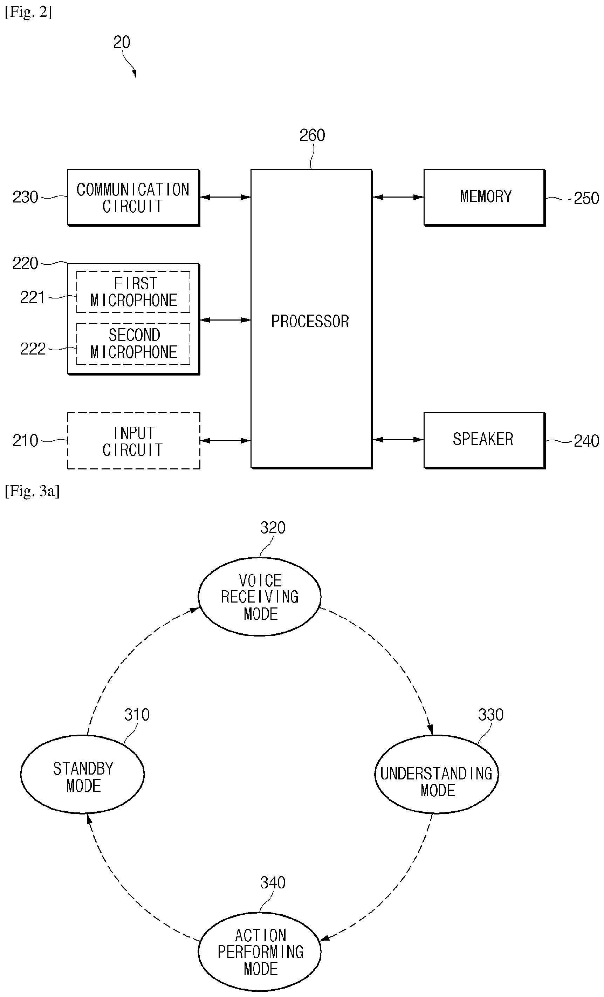

FIG. 2 is a block diagram of an electronic device, according to an embodiment.

Referring to FIG. 2, the electronic device 20 includes a microphone 220, a speaker 240, a memory 250, and a processor 260, and may include an input circuit 210 and a communication circuit 230. In an embodiment, the electronic device 20 may exclude some components or may further include other additional components. For example, the electronic device 20 may not include the input circuit 210. In an embodiment, some components of the electronic device 20 may be combined to form one entity, which may identically perform functions of the corresponding components before the combination.

According to an embodiment, the input circuit 210 may include at least one of a touch screen display, a pressable button, or a touchable button. For example, the pressable button or the touchable button may be a button provided on the front surface or the side surface of the electronic device 20. When the input circuit 210 includes the touch screen display, the electronic device 20 may provide a display function through the touch screen display.

According to an embodiment, the microphone 220 receives a user utterance. For example, the microphone 220 may receive the user utterance and may output the analog or digital signal corresponding to the received user utterance. The microphone 220 may include a first microphone 221 (e.g., a low-power microphone) that is always activated and a second microphone 222 (e.g., a high-performance microphone) that is activated or deactivated depending on the instruction of the processor 260. The second microphone 222 may be deactivated in a state where at least intelligent app or the intelligent assistance service is not executed. In this specification, an embodiment is exemplified as the microphone 220 includes the first microphone 221 and the second microphone 222. However, an embodiment is not limited thereto. For example, the microphone 220 may include only the first microphone 221 that is always activated or may include three or more microphones (e.g., including the first microphone 221 and the second microphone 222).

According to an embodiment, the communication circuit 230 may communicate with the intelligent server 10 through a specified communication channel. For example, the specified communication channel may include a communication channel in the wireless communication scheme such as 3G, 4G, 5G, Wi-Fi, or the like.

According to an embodiment, the speaker 240 may output the sound according to the instruction of the processor 260.

According to an embodiment, the memory 250 stores, for example, instructions or data associated with at least one other component of the electronic device 20. The memory 250 stores instructions that, when executed, cause the processor 260 to execute an intelligent app or an intelligent assistance service providing a voice recognition service when receiving a wake-up utterance (e.g., Hi Bixby) through the microphone 220 (e.g., the first microphone 221), to perform an action determined based on a first user utterance received through the microphone 220, using the intelligent app or intelligent assistance service, to determine whether a trigger word is recognized based on a second user utterance received through the microphone 220 within the time (the selected time) selected from a point in time when the execution of the first action is completed, using the intelligent app or the intelligent assistance service, to perform a second action determined based on the second user utterance when the trigger word is recognized based on the second user utterance, and to terminate the intelligent app or the intelligent assistance service when the trigger word is not recognized based on the second user utterance within a selected time from a point in time when the execution of a first action is completed. The wake-up utterance may include a specific word or a specific phrase, and may be an utterance having a specific user's acoustic characteristics (e.g., specific frequency characteristics). The selected time may include the time after a point in time when the execution of the first action is completed. The trigger word may be selected by a user input through the input circuit 210 or may include the word or phrase selected by the processor 260.

According to an embodiment, the processor 260 may perform data processing or an operation associated with a control and/or a communication of at least one other component(s) of the electronic device 20 by using instructions stored in the memory 250. When receiving a wake-up utterance through the first microphone 221 (a standby mode), the processor 260 may execute the intelligent app or the intelligent assistance service providing the voice recognition service. Meanwhile, when the processor 260 identifies a specified input (e.g., a touch or a press) through an input circuit (e.g., a touch sensor or a physical button), the processor 260 may execute the intelligent app or the intelligent assistance service.

According to an embodiment, the processor 260 may perform the action determined based on the first user utterance received through the second microphone 222, using the intelligent app or the intelligent assistance service. For example, when receiving a first user utterance, the processor 260 may convert the first user utterance into first voice data and may transmit the converted first voice data to the intelligent server 10 through the communication circuit 230 (voice recognition mode). When receiving the first voice data, the intelligent server 10 may convert the received first voice data into a text and may determine a user's intent based on the converted text. The intelligent server 10 may determine a first action according to the determined intent of the user, may generate information associated with the execution of the determined first action, and may transmit the generated information associated with the execution of the first action to the electronic device 20 (understanding mode). When receiving the information associated with the execution of the first action, the electronic device 20 may perform the first action determined based on the first user utterance, based on the information associated with the execution of the first action, using the intelligent app or the intelligent assistance service (action performing mode). While the determined action is performed or when the execution of the determined action is completed, the processor 260 may output the first sound associated with the execution of the action through the speaker 240, using the intelligent app or the intelligent assistance service. For example, the first sound associated with the execution of the action may be the sound provided from the intelligent server 10 or may be the sound generated by the electronic device 20 based on the information associated with the execution of the action. For example, the first sound associated with the execution of the action may be the sound guiding a procedure of performing the action or the sound guiding the result of performing the action.

According to an embodiment, the processor 260 may determine whether a trigger word is recognized, based on the second user utterance received through the second microphone 222 within the selected time from a point in time when the execution of the first action is completed, using the intelligent app or the intelligent assistance service (dialog mode). For example, the processor 260 may convert a second user utterance into second voice data, may convert the second voice data into a text, and may determine whether a trigger word is included in the converted text, using the intelligent app or the intelligent assistance service. The selected time (e.g., about 30 minutes) may be the time set by default or the time set to be changed by the user. For example, the trigger word may include a word associated with a request for an action, which is specified through the input circuit 210, from among a plurality of actions capable of being performed by the electronic device 20. For another example, the trigger word may include a word (a word associated with a category) associated with a request for an action, which belongs to the category specified through the input circuit 210, from among a plurality of actions capable of being performed by the electronic device 20. The trigger word may include at least one of a phrase for making a request for an action of the plurality of actions capable of being performed by the electronic device 20, a specified topic changing word, or a word indicating the electronic device 20.

According to an embodiment, prior to recognizing the trigger word based on the second user utterance, the processor 260 may identify an utterance speed change, a tone change, and an intonation change, based on the second user utterance. The processor 260 may determine whether the identified utterance speed change, the identified tone change, and the identified intonation change satisfy a first specified condition; when the identified utterance speed change, the identified tone change and the identified intonation change satisfy the first specified condition, the processor 260 may determine whether the trigger word is recognized based on the second user utterance. For example, when an utterance speed is reduced by a specified speed or more, when a tone frequency is reduced by a specified frequency or less, or when the change in intonation is within a specified range, the processor 260 may determine whether the identified utterance speed change, the identified tone change, and the identified intonation change satisfy the first specified condition. When the identified utterance speed change, the identified tone change and the identified intonation change do not satisfy the first specified condition, the processor 260 may not recognize the trigger word based on the second user utterance. For example, when the identified utterance speed change, the identified tone change and the identified intonation change do not satisfy the first specified condition, the processor 260 may not convert the second user utterance into second voice data.

According to an embodiment, when the trigger word is recognized within the selected time from a point in time when the execution of the first action is completed, the processor 260 may determine the sentence (text) including the trigger word, using the intelligent app or the intelligent assistance service. For example, in a procedure of converting the second user utterance received through the second microphone 222 into a text, the processor 260 may identify the reception time interval (e.g., the output signal interval of the second microphone 222) of the second user utterance and may determine the sentence including a trigger word by identifying the end point of the second user utterance based on the identified time interval.

The processor 260 may transmit the sentence including a trigger word to the intelligent server 10 through the communication circuit 230 (understanding mode). When receiving the sentence including a trigger word, the intelligent server 10 may determine the user's intent based on the received sentence. The intelligent server 10 may determine a second action according to the determined intent of the user and may transmit information associated with the execution of the determined second action to the electronic device 20. When receiving the information associated with the execution of the second action, the electronic device 20 may perform the second action determined based on the second user utterance, based on the information associated with the execution of the second action. While the determined second action is performed or when the execution of the determined second action is completed, the processor 260 may output the second sound associated with the execution of the action through the speaker 240.

According to an embodiment, before the processor 260 determines the sentence including a trigger word and then transmits the determined sentence to the intelligent server 10, the processor 260 may determine whether the sentence is misrecognized, based on the location of the trigger word in the determined sentence (dialog mode). For example, when the trigger word is positioned at the end of the sentence, the processor 260 may determine that the sentence is not misrecognized. For another example, when the trigger word is positioned at the front of the sentence, the processor 260 may determine that the sentence is misrecognized. When the processor 260 determines that the sentence including a trigger word is misrecognized, the processor 260 may not transmit the sentence including the trigger word to the intelligent server 10. Additionally, when the processor 260 determines that the sentence including a trigger word is misrecognized, the processor 260 may output the sound for requesting the reutterance of the sentence including a trigger word, through the speaker 240. For example, when the processor 260 recognizes the trigger word of "let me know" and does not identify a target to be notified, the processor 260 may output a sound for requesting the reutterance such as "what do you want me to tell you"

According to an embodiment, before the processor 260 may determine the sentence including a trigger word and then the determined sentence to the intelligent server 10, the processor 260 may determine whether a reject word (e.g., the other selected word or phrase) is included in the sentence including a trigger word; when the reject word is included in the sentence including a trigger word, the processor 260 may not transmit the sentence to the intelligent server 10. For example, the reject word may be selected through the input circuit 210 by the user and may include another word or phrase selected by the operation of the processor 260. According to various embodiments, the processor 260 may first determine whether the reject word is included in each sentence recognized based on the second user utterance; only when the reject word is not included, the processor 260 may determine whether the trigger word included in the second user utterance.

According to an embodiment, the processor 260 may determine whether the trigger word is recognized, based on a third user utterance within the selected time from a point in time when the execution of the second action is completed using the intelligent app or the intelligent assistance service. When the trigger word is recognized based on the third user utterance within the selected time from a point in time when the execution of the second action is completed, the processor 260 may extend the execution time of the intelligent app or the intelligent assistance service and may terminate the intelligent app or the intelligent assistance service when the trigger word is not recognized based on the third user utterance within the selected time from a point in time when the execution of the second action is completed.

According to an embodiment, when the trigger word is not recognized based on the second user utterance within the selected time from a point in time when the execution of the first action is completed, the processor 260 may terminate the intelligent app or the intelligent assistance service (standby mode). When the intelligent app or the intelligent assistance service is terminated, the processor 260 may provide a voice recognition service after receiving a wake-up utterance or a specified input.

According to various embodiments, when the processor 260 recognizes a stop request word (e.g., the other selected word or phrase) for requesting the termination of the voice recognition service based on the second user utterance, even though the selected time does not expire, the processor 260 may deactivate the second microphone 222 and may terminate the intelligent app or the intelligent assistance service.

According to various embodiments, the processor 260 may determine whether the use of the dialog mode through the input circuit 210 is set and may determine whether to extend the execution time of the intelligent app or the intelligent assistance service or whether to terminate the intelligent app or the intelligent assistance service, after the execution of the first action based on the first user utterance is completed, depending on whether the use of the dialog mode is set. For example, when the use of the dialog mode (or dialog function) is set through the input circuit 210, the processor 260 may monitor whether the trigger word is recognized within the time selected based on the second user utterance at least once, after the processor 260 performs the first action. On the other hand, when the use of the dialog mode is not set through the input circuit 210, the processor 260 may immediately terminate the intelligent app or the intelligent assistance service after the processor 260 performs the first action. According to various embodiments, the settings of the use of the dialog mode may be set based on the user utterance received through the microphone 220.

According to various embodiments, as well as the sentence including a trigger word, the processor 260 may transmit the previous sentence (at least one sentence is included) of the sentence including a trigger word, to the intelligent server 10.

According to various embodiments, when the electronic device 20 determines the intent of the user based on the first user utterance or the second user utterance and then is capable of generating information associated with the execution of an action according to the determined intent of the user (e.g., when including an NLU module), the electronic device 20 may determine the user's intent by itself based on the first user utterance or the second user utterance without communicating with the intelligent server 10 and may generate information associated with the execution of an action according to the determined intent.

According to the above-described embodiment, when the electronic device 20 receives a wake-up utterance (or a specified input) and then starts the voice recognition service, the electronic device 20 may monitor whether a trigger word is included in user utterances, in real time and may perform an action corresponding to a user utterance, based on a part (the trigger word) of the user utterances replacing the wake-up utterance. Accordingly, the conventional inconvenience that the user needs to repeatedly perform the wake-up utterance to make a request for a plurality of actions using the voice recognition service may be resolved.

FIG. 3a illustrates operating modes for a voice recognition service of an electronic device in the case where the use of a dialog mode is not set, according to an embodiment.

Referring to FIG. 3a, in a standby mode 310, when the electronic device 20 receive a wake-up utterance (e.g., Hi Bixby) through a microphone (e.g., the first microphone 221) or receive a specified input through the input circuit 210, the electronic device 20 may execute an intelligent app or an intelligent assistance service and may switch to a voice receiving mode 320. In the standby mode 310, the first microphone 221 may be activated, the second microphone 222 may be deactivated, and the intelligent app or the intelligent assistance service may not be executed. In the voice receiving mode 320, the electronic device 20 may activate the second microphone 222 and may execute the intelligent app or the intelligent assistance service providing the voice recognition service.

In the voice receiving mode 320, the electronic device 20 may convert the first user utterance received through the second microphone 222 to first voice data and may transmit the first voice data to the intelligent server 10 through the communication circuit 230. In this case, the intelligent server 10 may convert the received voice data into a text.

When the reception of the first user utterance is completed, the mode of the electronic device 20 may be switched from the voice receiving mode 320 to an understanding mode 330. For example, when the first user utterance is not received during the other selected time, the electronic device 20 may determine that the reception of the first user utterance is completed, and the mode the electronic device 20 may be switched from the voice receiving mode 320 to the understanding mode 330. In the understanding mode 330, the intelligent server 10 may determine a user's intent based on the text for the first user utterance and may determine the first action according to the determined intent of the user. The intelligent server 10 may transmit information associated with the execution of the determined first action, to the electronic device 20.

When the electronic device 20 receives the information associated with the execution of the first action from the intelligent server 10, the mode of the electronic device 20 may be switched to an action performing mode 340. In the action performing mode 340, the electronic device 20 may perform the first action corresponding to the first user utterance, based on the information associated with the execution of the first action received from the intelligent server 10. When the electronic device 20 completes the execution of the first action, the electronic device 20 may terminate the intelligent app or the intelligent assistance service and then the mode of the electronic device 20 may be switched to the standby mode 310.

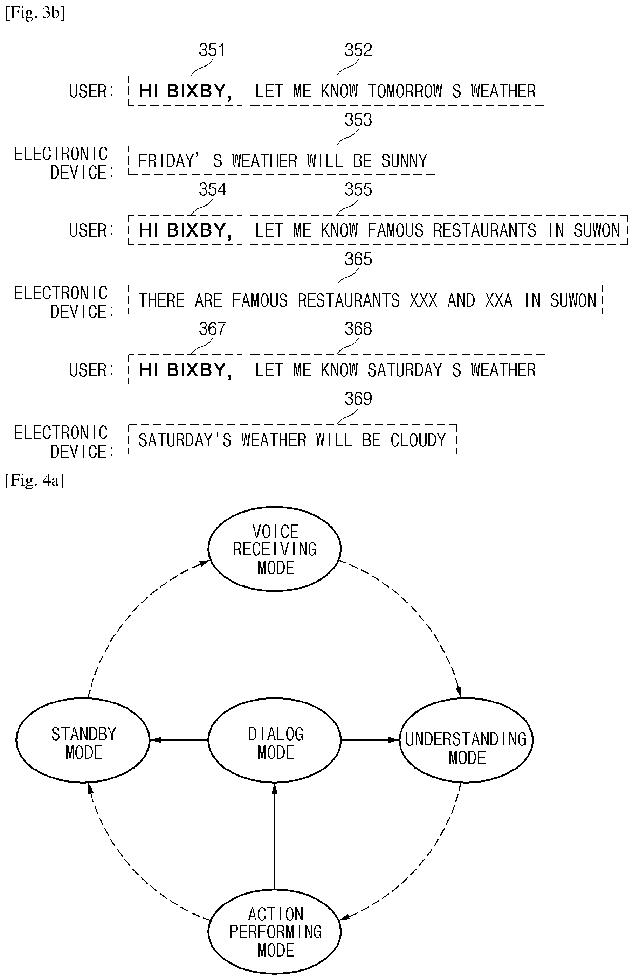

FIG. 3b illustrates an example of a voice recognition service in the case where the use of a dialog mode is not set, according to an embodiment.

Referring to FIG. 3b, in the case where the use of the dialog mode is not set, when the electronic device 20 receives a wake-up utterance 351 (a standby mode), the electronic device 20 may execute an intelligent app or an intelligent assistance service (voice recognition mode). In a voice recognition mode, the electronic device 20 may receive a user utterance 352 of "let me know tomorrow's weather", may convert the user utterance 352 into first voice data, and may transmit the first voice data to the intelligent server 10. The intelligent server 10 may determine a first action corresponding to a first user utterance based on the first voice data and may transmit the information associated with the execution of the first action to the electronic device 20 (understanding mode). The electronic device 20 may receive information associated with the execution of the first action from the intelligent server 10 and may perform a first action 353 of notifying the user of Friday's weather based on the information associated with the execution of the first action, for example, the first action of outputting the sound of "Friday's weather will be sunny" (action performing mode). After performing the first action, the electronic device 20 may terminate the intelligent app or the intelligent assistance service and then the mode of the electronic device 20 may be switched to the standby mode.

In the standby mode, the electronic device 20 may receive a wake-up utterance 354 again; the mode of the electronic device 20 may be switched to the voice receiving mode, and then the electronic device 20 may receive a user utterance 355 of "let me know famous restaurants in Suwon" to transmit the user utterance 355 to the intelligent server 10. When the electronic device 20 completes the reception of the user utterance 355, the mode of the electronic device 20 may be switched into the understanding mode. In the understanding mode, the intelligent server 10 may determine a second action based on the user utterance 355 and may transmit information associated with the execution of the determined second action to the electronic device 20. When the electronic device 20 receives information associated with the execution of the second action determined based on the user utterance 355 from the intelligent server 10, the mode of the electronic device 20 may be switched from the understanding mode to the action performing mode. In the action performing mode, after performing an action 365 of notifying the user of the famous restaurants in Suwon based on the information associated with the execution of the received action, for example, an action of outputting the sound of "there are famous restaurants XXX and XXA in Suwon", the electronic device 20 may terminate the intelligent app or the intelligent assistance service and then the mode of the electronic device 20 may be switched to the standby mode again.

In the standby mode, the electronic device 20 may receive a wake-up utterance 367 again and then the mode of the electronic device 20 may be switched to the voice receiving mode; the electronic device 20 may receive a user utterance 368 of "let me know Saturday's weather" to transmit the user utterance 368 to the intelligent server 10. When the electronic device 20 completes the reception of the user utterance 368, the mode of the electronic device 20 may be switched into the understanding mode. In the understanding mode, the intelligent server 10 may determine a third action based on the user utterance 368 and may transmit information associated with the execution of the third action to the electronic device 20. When the electronic device 20 receives information associated with the execution of the third action determined based on the user utterance 368 from the intelligent server 10, the mode of the electronic device 20 may be switched from the understanding mode to the action performing mode. In the action performing mode, the electronic device 20 may perform an action 369 of notifying the user of Saturday's weather based on the information associated with the execution of the received action, for example, an action of outputting the sound of "Saturday's weather will be cloudy", and then the mode of the electronic device 20 may be switched to the standby mode again.

As in the above-described embodiment, when the use of a dialog mode is not set through the input circuit 210, the electronic device 20 needs the total three wake-up utterances 351, 354, and 357 to perform the three actions 353, 365, and 369 corresponding to the three user utterances 352, 355, and 368, thereby causing the user's inconvenience. In addition, the processing load may be great and the processing may be complicated, by repeating the execution and termination of the intelligent app or the intelligent assistance service for the voice recognition service.

FIG. 4a illustrates operating modes for a voice recognition service of an electronic device in the case where the use of a dialog mode is set, according to an embodiment.

Referring to FIG. 4a, in the case where the use of the dialog mode is set, when the electronic device 20 recognizes a wake-up utterance through the first microphone 221 in a standby mode or receives a specified input through the input circuit 210 in the standby mode, the mode of the electronic device 20 may be switched to a voice receiving mode. The electronic device 20 may activate the second microphone 222 in a voice receiving mode by an intelligent app or an intelligent assistance service and execute the intelligent app or the intelligent assistance service. When the electronic device 20 completes the reception of a first user utterance in the voice receiving mode, the mode of the electronic device 20 may be switched to an understanding mode. The intelligent server 10 may determine a user's intent based on the first user utterance and may determine the first action according to the determined intent of the user. The intelligent server 10 may generate information associated with the execution of the determined first action and may transmit the generated information associated with the execution of the first action to the electronic device 20. When the electronic device 20 receives the information associated with the execution of the first action, the mode of the electronic device 20 may be switched from the understanding mode to the action performing mode. In the action performing mode, the electronic device 20 performs the first action determined based on the first user utterance, based on the information associated with the execution of the first action by the intelligent app or the intelligent assistance service.

When the use of the dialog mode is set, the mode of the electronic device 20 may be switched from the action performing mode to the dialog mode. In the dialog mode, the electronic device 20 determines whether a trigger word is recognized based on the second user utterance received through the second microphone 222 within the selected time after the execution of an action is completed. The electronic device 20 converts the second user utterance received through the second microphone 222 into a text and determines whether the trigger word is recognized from the converted text. When the trigger word is recognized based on the second user utterance, the electronic device 20 may determine the sentence including the trigger word and may transmit the determined sentence to the intelligent server 10. The intelligent server 10 may determine a user's intent based on the second user utterance determined based on the sentence received from the electronic device 20 and may determine the second action according to the determined intent of the user. The intelligent server 10 may transmit information associated with the execution of the second action determined based on the received sentence, to the electronic device 20. When the electronic device 20 receives the information associated with the execution of the second action, the mode of the electronic device 20 may be switched from the understanding mode to the action performing mode. In the action performing mode, the electronic device 20 performs a second action of notifying the user of Saturday's weather based on the information associated with the execution of the second action. When the electronic device 20 completes the execution of the second action, the mode of the electronic device 20 may be switched from the action performing mode to the dialog mode again.

When the electronic device 20 fails to recognize the trigger word based on the second user utterance received through the second microphone 222 in the dialog mode, the mode of the electronic device 20 may be switched to the standby mode. Before the mode of the electronic device 20 is switched to the standby mode, the electronic device 20 may deactivate the second microphone 222 and may terminate the execution of the intelligent app or the intelligent assistance service.

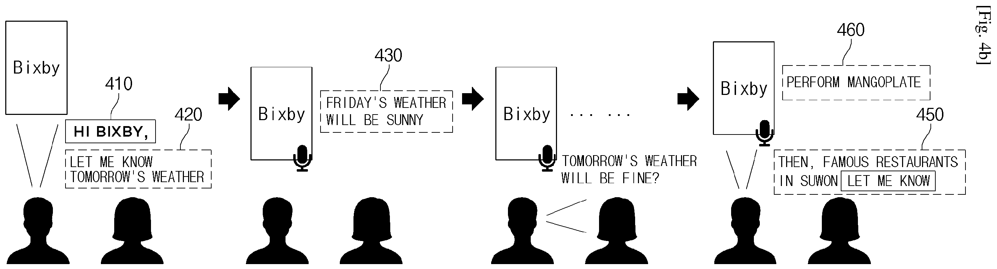

FIG. 4b illustrates an example of a voice recognition service in the case where the use of a dialog mode is set, according to an embodiment.

Referring to FIG. 4b, in the case where the use of a dialog mode is set, when the electronic device 20 receives a wake-up utterance 410 in a standby mode, the mode of the electronic device 20 may be switched to a voice receiving mode and then the electronic device 20 may transmit a received first user utterance 420 of "let me know tomorrow's weather" to the intelligent server 10. When the electronic device 20 completes the reception of the first user utterance 420, the mode of the electronic device 20 may be switched into the understanding mode. In the understanding mode, the intelligent server 10 may transmit information associated with the execution of an action determined based on the first user utterance 420, to the electronic device 20. When the electronic device 20 receives information associated with the execution of the first action determined based on the first user utterance 420 from the intelligent server 10, the mode of the electronic device 20 may be switched from the understanding mode to the action performing mode and then the electronic device 20 may perform the first action of outputting the first sound of "Friday's weather will be sunny" for providing a notification of Friday's weather based on the information associated with the execution of the first action, which is received in the action performing mode, and then the mode of the electronic device 20 may be switched to the dialog mode.

The electronic device 20 may recognize a trigger word (e.g., let me know) that is a part of a user utterance 450, based on the user utterance 450 received within the selected time in the dialog mode. When the electronic device 20 recognizes the trigger word "let me know", the electronic device 20 may determine the sentence of "let me know famous restaurants in Suwon" including the trigger word of "let me know" and may transmit the determined sentence to the intelligent server 10, and then the mode of the electronic device 20 may be switched to the understanding mode. The intelligent server 10 receives the sentence of "let me know famous restaurants in Suwon" including a trigger word from the electronic device 20, may determine a user's intent based on "let me know famous restaurants in Suwon" and may determine the second action of providing a notification of the famous restaurants in Suwon according to the determined intent of the user. The intelligent server 10 may generate information associated with the execution of the second action of providing a notification of the famous restaurants in Suwon and may transmit the generated information associated with the execution of the second action to the electronic device 20.

When the electronic device 20 receives the information associated with the execution of the second action, the mode of the electronic device 20 may be switched from the understanding mode to the action performing mode. In the action performing mode, the electronic device 20 may perform the second action of notifying the user of the famous restaurants in Suwon based on the information associated with the execution of the action. For example, the electronic device 20 may execute 'MangoPlate' that is an application guiding nearby famous restaurants and may output the sound of "perform MangoPlate"

As in the above-described embodiments, when the use of the dialog mode is set through the input circuit 210, because the electronic device 20 needs only one wake-up utterance 410 to perform a plurality of actions 430 and 460 corresponding to the first and second user utterances 420 and 450, when the electronic device 20 continuously or frequently makes a request for the response based on a user utterance, the convenience of a voice recognition service may be improved.

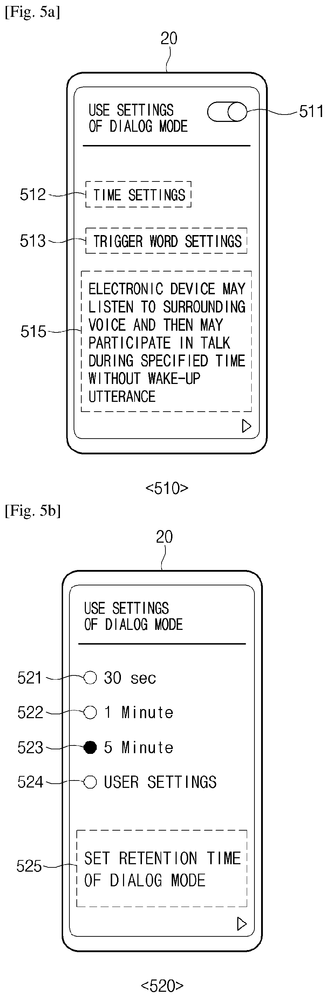

FIG. 5a illustrates a user interface (UI) screen for setting the use of a dialog mode, according to an embodiment.

Referring to FIG. 5a, in a screen 510, for example, the electronic device 20 may provide a virtual button 511 for activating or deactivating the use of a dialog mode, which is capable of moving depending on a user input through the input circuit 210. When the virtual button 511 is located on the right side, the electronic device 20 may determine that the use of the dialog mode is set and may provide (e.g., activate) a virtual button 512 and a virtual button 513 for the detailed settings of the dialog mode. On the other hand, when the virtual button 511 is located on the left side, the electronic device 20 may determine that the use of the dialog mode is not set and may not provide (e.g., deactivate) the virtual button 512 and the virtual button 513 for the detailed settings of the dialog mode. According to various embodiments, in the screen 510, the electronic device 20 may display a phrase 515 for explaining the dialog mode. For example, the electronic device 20 may display the phrase 515 of "the electronic device may listen to the surrounding voice and participate in the talk during the selected time without a wake-up utterance" for explaining the dialog mode at the lower end in the screen 510.

In a state where the use of the dialog mode is set, when the virtual button 512 through the input circuit 210 is selected, the electronic device 20 may display the UI screen for setting the time of the dialog mode. According to various embodiments, in a state where the use of the dialog mode is set, when the virtual button 513 through the input circuit 210 is selected, the electronic device 20 may display the UI screen for specifying the trigger word for the dialog mode through the input circuit 210.

FIG. 5b illustrates a UI screen for setting the time of a dialog mode, according to an embodiment.

Referring to FIG. 5b, in a screen 520, the electronic device 20 may display a UI for setting the time of a dialog mode. For example, the electronic device 20 may display the screen 520 when the virtual button 512 is selected in the screen 510 of FIG. 5a. The screen 520 may include virtual buttons 521 to 524 for selecting (or setting) the selected time of the dialog mode. In the screen 520, the electronic device 20 may set the selected time to 5 minutes when the virtual button 523 associated with 5 minutes is selected. For another example, when the virtual button 524 associated with the function (the user's settings of the screen 520) to arbitrarily set the selected time of the dialog mode is selected, the electronic device 20 may provide an interface capable of arbitrarily setting the selected time based on a user input. According to various embodiments, in the screen 520, the electronic device 20 may display a phrase 525 for explaining the time settings of the dialog mode.

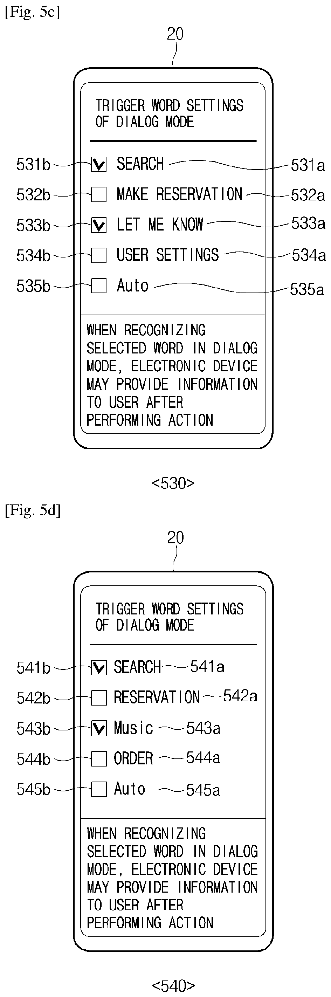

FIG. 5c illustrates an example of a UI screen for setting a trigger word of a dialog mode, according to an embodiment.

Referring to FIG. 5c, in a screen 530, the electronic device 20 may display a UI for setting the trigger word of a dialog mode. For example, the electronic device 20 may display the screen 530 when the virtual button 513 is selected in the screen 510 of FIG. 5a. In the screen 530, the electronic device 20 may display a trigger word list (531a, 532a, 533a, 534a, or 535a) capable of being specified and a virtual button list (531b, 532b, 533b, 534b, or 535b) for selecting each trigger word list (at least one of 531a, 532a, 533a, 534a, or 535a). In the screen 530, when the virtual button 531b and the virtual button 533b are selected through the input circuit 210, the electronic device 20 may specify "search" and "let me know" as a trigger word. In the screen 530, when the virtual button 534b associated with the function 534a to arbitrarily set the trigger word is selected through the input circuit 210, the electronic device 20 may provide an interface, into which a user may arbitrarily enter the trigger word, and may set the word, which is entered through the provided interface, to the trigger word.

According to various embodiments, in the screen 530, when the virtual button 535b that allows the electronic device 20 to automatically select the trigger word through the input circuit 210 is selected, the electronic device 20 (e.g., the processor 260 of FIG. 2) may set (select) at least one of a specified topic changing word (e.g., Hey, then) or a word (e.g., Bixby or Bix) indicating the electronic device 20 and words (e.g., search) for requesting a plurality of actions, which are capable of being performed by the electronic device 20, to a trigger word.

FIG. 5d illustrates another example of a UI screen for setting a trigger word of a dialog mode, according to an embodiment.

Referring to FIG. 5d, in a screen 540, the electronic device 20 may display a UI for specifying a trigger category to which a trigger word of a dialog mode belongs. For example, the electronic device 20 may display the screen 540 when the virtual button 513 is selected in the screen 510 of FIG. 5a. In the screen 540, the electronic device 20 may display a trigger category (541a, 542a, 543a, 544a, or 545a) capable of being set and a virtual button list (541b, 542b, 543b, 544b, or 545b) for selecting each trigger category list (at least one of 541a, 542a, 543a, 544a, or 545a).

In the screen 540, when the virtual button 541b and the virtual button 543b are selected through the input circuit 210, the electronic device 20 may designate words (or phrase) included in a word set (e.g., search, find, or let me know) for requesting an action belonging to a search category and a word (or phrase) set (e.g., play music, search for music, turn up the volume, or turn down the volume) for requesting an action belonging to a music category, to the trigger word of the dialog mode. In this regard, the memory 250 of the electronic device 20 may store a word set for requesting an action belonging to each trigger category list, and the electronic device 20 may designate all the word sets for requesting an action belonging to the selected category, to the trigger word when each trigger category is selected through the input circuit 210. According to various embodiments, in the screen 540, when the virtual button 545b that allows the electronic device 20 to automatically select the trigger word through the input circuit 210 is selected, the electronic device 20 (e.g., the processor 260 of FIG. 2) may set (select) at least one of a specified topic changing word (e.g., Hey, then) or a word (e.g., Bixby or Bix) indicating the electronic device 20 and words (e.g., search) for requesting a plurality of actions, which are capable of being performed by the electronic device 20, to a trigger word.

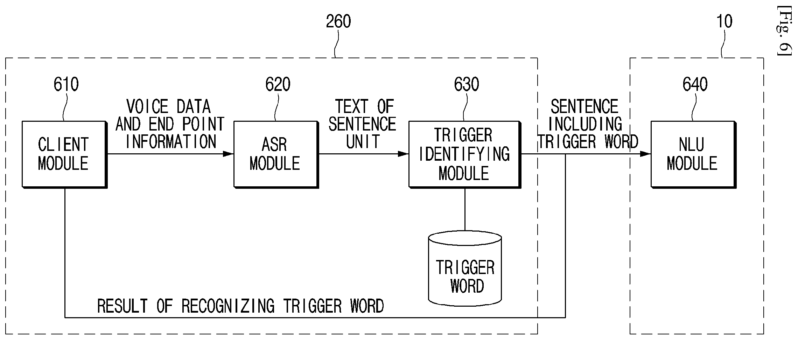

FIG. 6 illustrates an example of components of a processor, according to an embodiment.

Referring to FIG. 6, according to an embodiment, a processor (e.g., the processor 260 of FIG. 2) may include a client module 610, an automatic speech recognition (ASR) module 620, and a trigger identifying module 630. Each of the components of the processor 260 may be a separate hardware module or may be a software module implemented by at least one processor 260. For example, the function of each of the modules included in the processor 260 may be performed by one processor or may be performed by each separate processor.

In a standby mode, the client module 610 may be executed after a wake-up utterance; in a voice receiving mode, the client module 610 may preprocess a first user utterance received through the second microphone 222, may convert the first user utterance into first voice data, and may transmit the first voice data to the intelligent server 10. When receiving the first voice data, the intelligent server 10 may determine a user's intent based on the first voice data, using an ASR module (not illustrated) (e.g., a high-performance ASR module) and an NLU module 640, may generate information associated with the execution of the first action corresponding to the determined intent of the user, and may transmit the generated information associated with the execution of the first action, to an intelligent agent 270 in the electronic device 20 (understanding mode). When receiving the information associated with the execution of the first action from the intelligent server 10, the client module 610 may perform a first action based on the information associated with the execution of the first action in an action performing mode.

In a dialog mode, the client module 610 may preprocess the user utterance received through the second microphone 222 to convert the user utterance into voice data. For example, the client module 610 may remove echo and noise from the received user utterance to convert the user utterance, in which echo and noise are removed, to voice data. The client module 610 may detect an end point based on the time interval of the received user utterance and may generate end point information. The client module 610 may transmit the voice data converted in the dialog mode and the end point information to the ASR module 620.

When receiving the voice data and the end point information in the dialog mode, the ASR module 620 may convert the voice data into a text and may output the converted text based on the end point information in units of sentences.

In the dialog mode, the trigger identifying module 630 may compare a text included in each sentence with a specified trigger word (a trigger word) and may determine whether the trigger word is recognized (e.g., included) from each sentence, based on the comparison result. When the trigger word is recognized within the selected time, the trigger identifying module 630 may transmit the sentence including a trigger word to the intelligent server 10. For example, the trigger word may include a word associated with a request for an action, which is specified through the input circuit 210, from among a plurality of actions capable of being performed by the intelligent agent 270 in the electronic device 20.

When receiving the sentence including a trigger word in the understanding mode, the intelligent server 10 may determine the user's intent based on the received sentence using the NLU module 640 and may determine the second action according to the determined intent of the user. The NLU module 640 may generate information associated with the execution of the determined second action and may transmit the generated information associated with the execution of the second action to the client module 610.

In the action performing mode, the client module 610 or another module may perform the second action corresponding to the sentence including a trigger word, based on the information associated with the execution of the second action.

In the above-described embodiment, in the dialog mode (e.g., from a point in time when the execution of the first action is completed), when the trigger word is not recognized based on the second user utterance, the execution of each of the client module 610, the ASR module 620, and the trigger identifying module 630 may be terminated (standby mode).

According to various embodiments, the ASR module (not illustrated) and the NLU module 640 may be included in the intelligent agent 270 of the electronic device 20.

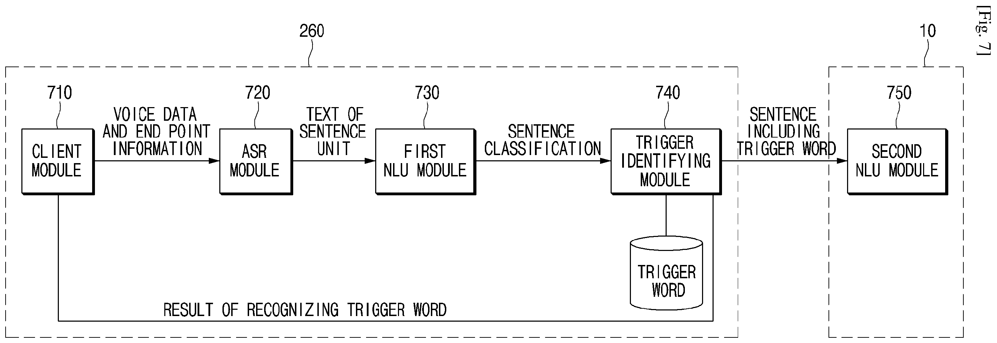

FIG. 7 illustrates another example of components of a processor, according to an embodiment.

Referring to FIG. 7, according to an embodiment, the processor 260 (e.g., the processor 260 of FIG. 2) may include a client module 710, an ASR module 720, a first NLU module 730, and a trigger identifying module 740. Each of the components of the processor 260 may be a separate hardware module or may be a software module implemented by at least one processor 260. For example, the function of each of the modules included in the processor 260 may be performed by one processor or may be performed by each separate processor.

In a standby mode, the client module 710 may be executed after a wake-up utterance; in a voice receiving mode, the client module 710 may preprocess a first user utterance received through the second microphone 222, may convert the first user utterance into first voice data, and may transmit the first voice data to the intelligent server 10. When receiving the first voice data, the intelligent server 10 may determine a user's intent based on the first voice data, using an ASR module (not illustrated) (e.g., a high-performance ASR module) and the second NLU module 750, may generate information associated with the execution of the first action corresponding to the determined intent of the user, and may transmit the generated information associated with the execution of the first action, to an intelligent agent 270 in the electronic device 20 (understanding mode). When receiving the information associated with the execution of the first action from the intelligent server 10, the client module 710 may perform a first action based on the information associated with the execution of the first action in an action performing mode.

In a dialog mode, the client module 710 may preprocess the user utterance received through the second microphone 222 to convert the user utterance into voice data. For example, the client module 710 may remove echo and noise from the received user utterance to convert the user utterance, in which echo and noise are removed, to voice data. The client module 710 may detect an end point based on the time interval of the received user utterance and may generate end point information. The client module 710 may transmit the voice data converted in the dialog mode and the end point information to the ASR module 720.

When receiving the voice data and the end point information in the dialog mode, the ASR module 720 (e.g., a low-performance ASR module) may convert voice data into a text and may output the converted text based on the end point information in units of sentences.

In the dialog mode, the first NLU module 730 (e.g., the low-performance NLU module) may divide each sentence into syntactic units (e.g., a word, a phrase, or a morpheme) and may classify a category to which each sentence belongs based on the meaning of the word included in each sentence. For example, the first NLU module 730 may determine whether the meaning of the word included in each sentence belongs to the category selected (or selected by the intelligent agent 270 in the electronic device 20) through the input circuit 210, using a first natural language recognition database stored in the memory 250 based on the recurrent neural network (RNN) algorithm.

In the dialog mode, the trigger identifying module 740 may compare a text included in each sentence with trigger words (a trigger word) associated with the selected category obtained from the memory 250 and may determine whether at least one trigger word is included (recognized) in each sentence, based on the comparison result. When the trigger word is included in each sentence, the trigger identifying module 740 may transmit the sentence including a trigger word to the intelligent server 10. For another example, the trigger word may include a word (a word associated with a category) associated with a request for an action, which belongs to the category specified through the input circuit 210, from among a plurality of actions capable of being performed by the intelligent agent 270 in the electronic device 20. Alternatively, the trigger word may include at least one of a phrase for making a request for an action of the plurality of actions capable of being performed by the intelligent agent 270 in the electronic device 20, a specified topic changing word, or a word indicating the intelligent agent 270 in the electronic device 20.

When receiving the sentence including a trigger word, the intelligent server 10 may determine the user's intent based on the sentence received using a second NLU module 750 and may determine the action according to the determined intent of the user. The second NLU module 750 may generate information associated with the execution of the determined action and may transmit the generated information associated with the execution of the action to the client module 710 (understanding mode).

The client module 710 or another module may perform the action corresponding to the sentence including a trigger word, based on the information associated with the execution of the action.

In the above-described embodiment, in the dialog mode (e.g., from a point in time when the execution of the first action is completed), when the trigger word is not recognized based on the second user utterance, the execution of each of the client module 710, the ASR module 720, the first NLU module 730, and the trigger identifying module 740 may be terminated (standby mode).

According to various embodiments, the ASR module (not illustrated) and the second NLU module 750 may be included in the intelligent agent 270 of the electronic device 20.

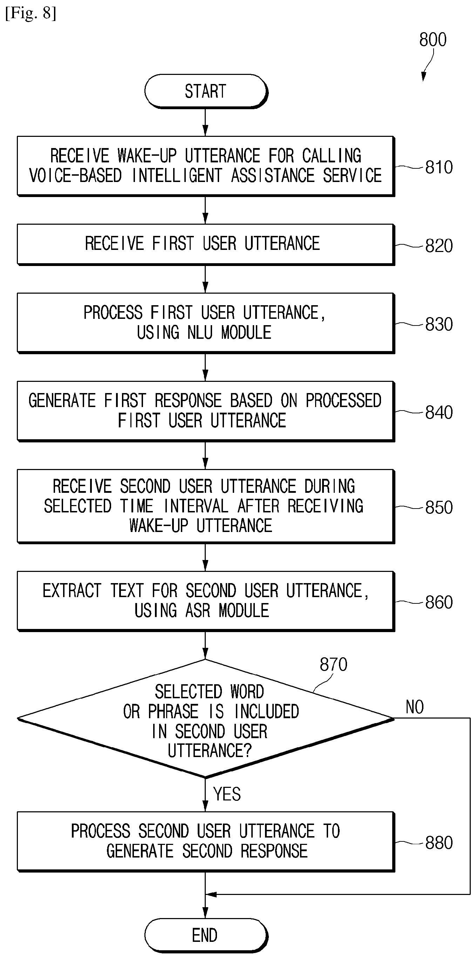

FIG. 8 illustrates a voice recognition service providing method 800 by an integrated intelligence system, according to an embodiment.

Referring to FIG. 8, in operation 810, the electronic device 20 may receive a wake-up utterance for calling a voice-based intelligent assistance service (a voice recognition service) through a microphone (e.g., the first microphone 221). When receiving the wake-up utterance, the electronic device 20 may execute an intelligent app or an intelligent assistance service and may activate the second microphone 222.

In operation 820, the electronic device 20 may receive a first user utterance through the microphone (e.g., the second microphone 222) after the wake-up utterance.

In operation 830, the electronic device 20 may process the first user utterance, using an NLU module (e.g., the second NLU module 750 of FIG. 7). For example, the electronic device 20 may convert the first user utterance into first voice data and may transmit the first voice data to the intelligent server 10. The intelligent server 10 may determine a user's intent based on the first voice data using the NLU module 750 and may determine the first action according to the determined intent of the user.

In operation 840, the intelligent server 10 may generate a first response based on the processed first user utterance. For example, the intelligent server 10 may generate information (or a first response) associated with the execution of the determined first action and may transmit the generated information associated with the execution of the first action to the electronic device 20. When receiving the information associated with the first action from the intelligent server 10, the electronic device 20 may perform the first action corresponding to the first user utterance based on the information associated with the execution of the first action.

In operation 850, the electronic device 20 may receive a second user utterance through the microphone (e.g., the second microphone 222) after performing the first action. After receiving the wake-up utterance, the electronic device 20 may receive the second user utterance through the microphone during the selected time interval.

In operation 860, the electronic device 20 may extract a text for the second user utterance, using an ASR module (e.g., the ASR module 720 of FIG. 7). For example, the electronic device 20 may convert the second user utterance into second voice data and may convert the second voice data into a text. The electronic device 20 may detect an end point based on the reception time interval of the second user utterance and may extract the text of a sentence unit based on the end point.

In operation 870, the electronic device 20 may determine whether the selected (or specified) word or phrase is included in the second user utterance. For example, the electronic device 20 may compare the text included in each sentence with the selected word or phrase and may determine whether the selected word or phrase is included in each sentence, based on the comparison result.

In operation 880, the intelligent server 10 may process the second user utterance to generate a second response when the selected word or phrase is included in the second user utterance. For example, when the selected word or phrase is included in the second user utterance, the electronic device 20 may transmit the sentence including the selected word or phrase to the intelligent server 10. The intelligent server 10 may determine a user's intent based on the sentence including the selected word or phrase using the NLU module 750and may determine the second action according to the determined intent of the user. The intelligent server 10 may generate information (or a second response) associated with the execution of the second action and may transmit the generated information associated with the execution of the second action to the electronic device 20. The electronic device 20 may perform the second action corresponding to the second user utterance, based on the information associated with the execution of the second action.

In operation 870, the intelligent server 10 may process the second user utterance not to generate the second response when the selected word or phrase is not included in the second user utterance. For example, when the selected word or phrase is not included in the second user utterance, the electronic device 20 may terminate the intelligent app or the intelligent assistance service after processing the second user utterance.

According to various embodiments, in operation 810, the electronic device 20 may receive a user input to call a voice-based intelligent assistance service through the input circuit 210 instead of the wake-up utterance.

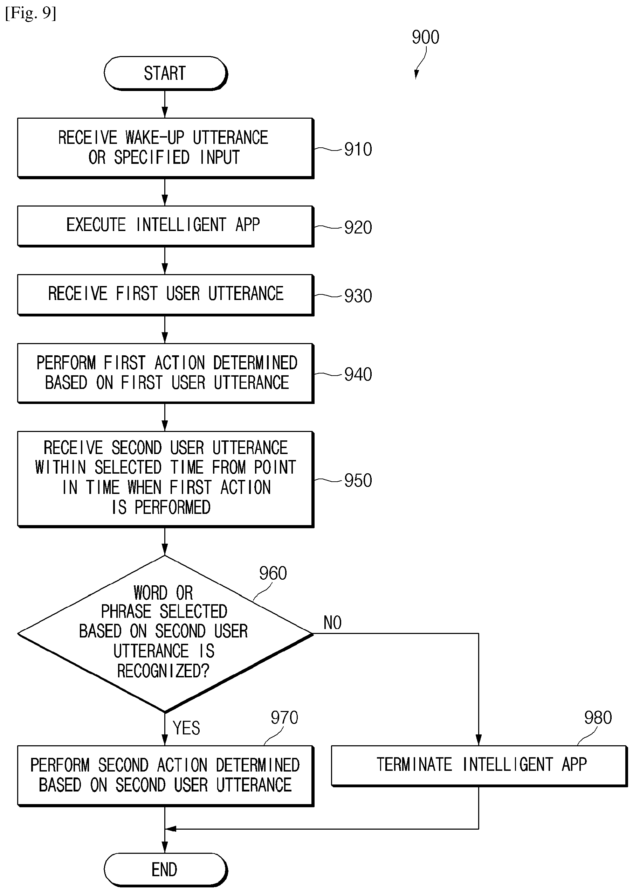

FIG. 9 illustrates a voice recognition service providing method 900 by an electronic device, according to an embodiment.

Referring to FIG. 9, in operation 910, the electronic device 20 may receive a wake-up utterance through the microphone 220 or may receive a specified input through the input circuit 210.

In operation 920, the electronic device 20 may execute an intelligent app or an intelligent assistance service providing a voice recognition service when receiving the wake-up utterance or the specified input.

In operation 930, the electronic device 20 may receive a first user utterance through the microphone 220. When receiving the first user utterance, the electronic device 20 may convert the first user utterance to first voice data to transmit the first voice data to the intelligent server 10. The intelligent server 10 may determine a user's intent based on the first voice data using the NLU module 750 and may determine the first action according to the determined intent of the user. The intelligent server 10 may generate information (or a first response) associated with the execution of the determined first action and may transmit the generated information associated with the execution of the first action to the electronic device 20.

In operation 940, the electronic device 20 may perform the first action determined based on the first user utterance. For example, the electronic device 20 may receive the information associated with the first action from the intelligent server 10 and may perform the first action determined based on the first user utterance, based on the information associated with the execution of the first action.

In operation 950, the electronic device 20 may receive the second user utterance through the microphone 220 within the selected time from a point in time when the first action is performed. In operation 950, the electronic device 20 may convert a second user utterance into second voice data in real time and may convert the second voice data into a text, while receiving the second user utterance. The electronic device 20 may detect an end point based on the reception time interval of the second user utterance and may extract the text of a sentence unit based on the end point. The selected time may include the time after a point in time when the first response is generated.

In operation 960, the electronic device 20 may determine whether the selected word or phrase is included in the second user utterance. For example, the electronic device 20 may determine whether the selected word or phrase is included in the text (the text of a sentence unit) for the second user utterance.

In operation 970, the electronic device 20 may perform the second action determined based on the second user utterance, when the selected word or phrase is recognized based on the second user utterance within the selected time from a point in time when an action is performed (the execution of an action is performed). For example, when the selected word or phrase is included in the text for the second user utterance, the electronic device 20 may transmit the sentence including the selected word or phrase to the intelligent server 10. The intelligent server 10 may determine a user's intent based on the sentence including the selected word or phrase using the NLU module 750 and may determine the second action according to the determined intent of the user. The intelligent server 10 may generate information (or a second response) associated with the execution of the determined second action and may transmit the generated information associated with the execution of the second action to the electronic device 20. When receiving the information associated with the execution of the second action, the electronic device 20 may perform the second action corresponding to the second user utterance, based on the information associated with the execution of the second action.

When the selected word or phrase is not recognized based on the second user utterance within the selected time from a point in time when the first action is performed in operation 960, the electronic device 20 may terminate the intelligent app or the intelligent assistance service in operation 970.

According to the above-described embodiment, when the electronic device 20 receives a wake-up utterance (or a specified input) and then starts the voice recognition service, the electronic device 20 may monitor whether a trigger word is included in user utterances, in real time and may perform an action corresponding to a user utterance, based on a part (the trigger word) of the user utterances replacing the wake-up utterance. Accordingly, the electronic device 20 may resolve the inconvenience of the conventional electronic device that the user needs to repeatedly perform a wake-up utterance to make a request for a plurality of actions.

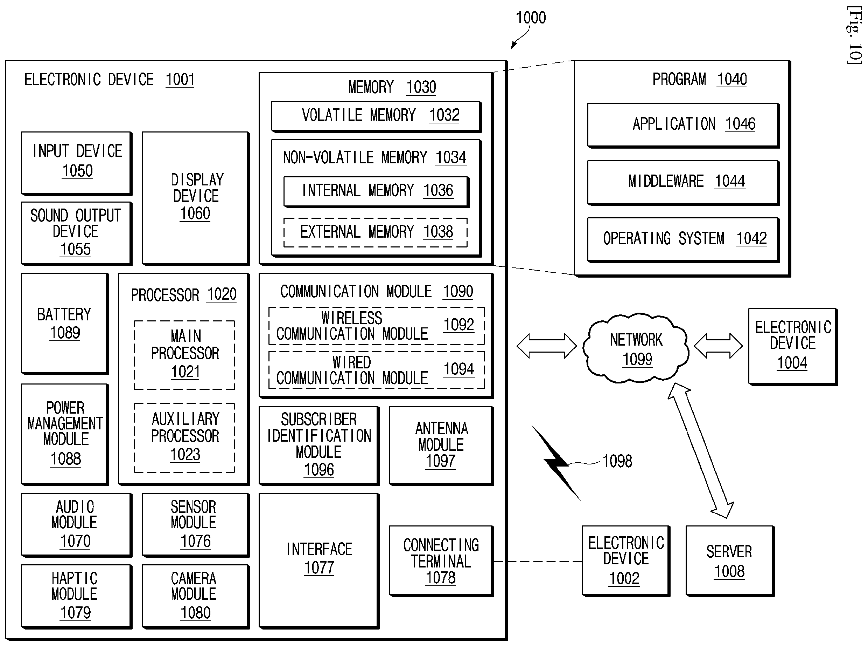

FIG. 10 is a block diagram illustrating an electronic device 1001 in a network environment 1000 according to various embodiments. Referring to FIG. 10, the electronic device 1001 in the network environment 1000 may communicate with an electronic device 1002 via a first network 1098 (e.g., a short-range wireless communication network), or an electronic device 1004 or a server 1008 via a second network 1099 (e.g., a long-range wireless communication network). According to an embodiment, the electronic device 1001 may communicate with the electronic device 1004 via the server 1008. According to an embodiment, the electronic device 1001 may include a processor 1020, memory 1030, an input device 1050, a sound output device 1055, a display device 1060, an audio module 1070, a sensor module 1076, an interface 1077, a haptic module 1079, a camera module 1080, a power management module 1088, a battery 1089, a communication module 1090, a subscriber identification module (SIM) 1096, or an antenna module 1097. In some embodiments, at least one (e.g., the diplay device 1060 or the camera module 1080) of the components may be omitted from the electronic devicF 1001, or one or more other components may be added in the electronic device 1001. In some embodiments, some of the components may be implemented as single integrated circuitry. For example, the sensor module 1076 (e.g., a fingerprint sensor, an iris sensor, or an illuminance sensor) may be implemented as embedded in the display device 1060 (e.g., a display).

The processor 1020 may execute, for example, software (e.g., a program 1040) to control at least one other component (e.g., a hardware or software component) of the electronic device 1001 coupled with the processor 1020, and may perform various data processing or computation. According to one embodiment, as at least part of the data processing or computation, the processor 1020 may load a command or data received from another component (e.g., the sensor module 1076 or the communication module 1090) in volatile memory 1032, process the command or the data stored in the volatile memory 1032, and store resulting data in non-volatile memory 1034. According to an embodiment, the processor 1020 may include a main processor 1021 (e.g., a central processing unit (CPU) or an application processor (AP)), and an auxiliary processor 1023 (e.g., a graphics processing unit (GPU), an image signal processor (ISP), a sensor hub processor, or a communication processor (CP)) that is operable independently from, or in conjunction with, the main processor 1021. Additionally or alternatively, the auxiliary processor 1023 may be adapted to consume less power than the main processor 1021, or to be specific to a specified function. The auxiliary processor 1023 may be implemented as separate from, or as part of the main processor 1021.

The auxiliary processor 1023 may control at least some of functions or states related to at least one component (e.g., the display device 1060, the sensor module 1076, or the communication module 1090) among the components of the electronic device 1001, instead of the main processor 1021 while the main processor 1021 is in an inactive (e.g., sleep) state, or together with the main processor 1021 while the main processor 1021 is in an active state (e.g., executing an application). According to an embodiment, the auxiliary processor 1023 (e.g., an image signal processor or a communication processor) may be implemented as part of another component (e.g., the camera module 1080 or the communication modue 1090) functionally related to the auxiliary processor 1023.

The memory 1030 may stoThe auxiliary processor 1023 may control at least some of functions or states related to at least one component (e.g., the display device 1060, the sensor module 1076, or the communication module 1090) among the components of the electronic device 1001, instead of the main processor 1021 while the main processor 1021 is in an inactive (e.g., sleep) state, or together with the main processor 1021 while the main processor 1021 is in an active state (e.g., executing an application). According to an embodiment, the auxiliary processor 1023 (e.g., an image signal processor or a communication processor) may be implemented as part of another component (e.g., the camera module 1080 or the communication modue 1090) functionally related to the auxiliary processor 1023.

The memory 1030 may store various data used by at least one component (e.g., the processor 1020 or the sensor module 1076) of the electronic device 1001. The various data may include, for example, software (e.g., the program 1040) and input data or output data for a command related thererto. The memory 1030 may include the volatile memory 1032 or the non-volatile memory 1034.

The program 1040may be stored in the memory 1030 as software, and may include, for example, an operating system (OS) 1042, middleware 1044, or an application 1046.

The input device 1050 may receive a command or data to be used by other component (e.g., the processor 1020) of the electronic device 1001, from the outside (e.g., a user) of the electronic device 1001. The input device 1050 may include, for example, a microphone, a mouse, a keyboard, or a digital pen (e.g., a stylus pen).

The sound output device 1055 may output sound signals to the outside of the electronic device 1001. The sound output device 1055 may include, for example, a speaker or a receiver. The speaker may be used for general purposes, such as playing multimedia or playing record, and the receiver may be used for an incoming calls. According to an embodiment, the receiver may be implemented as separate from, or as part of the speaker.

The display device 1060 may visually provide information to the outside (e.g., a user) of the electronic device 1001. The display device 1060 may include, for example, a display, a hologram device, or a projector and control circuitry to control a corresponding one of the display, hologram device, and projector. According to an embodiment, the display device 1060 may include touch circuitry adapted to detect a touch, or sensor circuitry (e.g., a pressure sensor) adapted to measure the intensity of force incurred by the touch.

The audio module 1070 may convert a sound into an electrical signal and vice versa. According to an embodiment, the audio module 1070 may obtain the sound via the input device 1050, or output the sound via the sound output device 1055 or a headphone of an external electronic device (e.g., an electronic device 1002) directly (e.g., wiredly) or wirelessly coupled with the electronic device 1001.

The sensor module 1076 may detect an operational state (e.g., power or temperature) of the electronic device 1001 or an environmental state (e.g., a state of a user) external to the electronic device 1001, and then generate an electrical signal or data value corresponding to the detected state. According to an embodiment, the sensor module 1076 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1077 may support one or more specified protocols to be used for the electronic device 1001 to be coupled with the external electronic device (e.g., the electronic device 1002) directly (e.g., wiredly) or wirelessly. According to an embodiment, the interface 1077 may include, for example, a high definition multimedia interface (HDMI), a universal serial bus (USB) interface, a secure digital (SD) card interface, or an audio interface.

A connecting terminal 1078 may include a connector via which the electronic device 1001 may be physically connected with the external electronic device (e.g., the electronic device 1002). According to an embodiment, the connecting terminal 1078 may include, for example, a HDMI connector, a USB connector, a SD card connector, or an audio connector (e.g., a headphone connector).

The haptic modul 1079 may c[nvert an electrical signal into a mechanical stimulus (e.g., a vibration or a movement) or electrical stimulus which may be recognized by a user via his tactile sensation or kinesthetic sensation. According to an embodiment, the haptic module 1079 may include, for example, a motor, a piezoelectric element, or an electric stimulator.

The camera module 1080 may capture a still image or moving images. According to an embodiment, the camera module 1080 may include one or more lenses, image sensors, image signal processors, or flashes.

The power management module 1088 may manage power supplied to the electronic device 1001. According to one embodiment, the power management module 1088 may be implemented as at least part of, for example, a power management integrated circuit (PMIC).

The battery 1089 may supply power to at least one component of the electronic device 1001. According to an embodiment, the battery 1089 may include, for example, a primary cell which is not rechargeable, a secondary cell which is rechargeable, or a fuel cell.

The communication module 1090 may support establishing a direct (e.g., wired) communication channel or a wireless communication channel between the electronic device 1001 and the external electronic device (e.g., the electronic device 1002, the electronic device 1004, or the server 1008) and performing communication via the established communication channel. The communication module 1090 may include one or more communication processors that are operable independently from the processor 1020 (e.g., the application processor (AP)) and supports a direct (e.g., wired) communication or a wireless communication. According to an embodiment, the communication module 1090 may include a wireless communication module 1092 (e.g., a cellular communication module, a short-range wireless communication module, or a global navigation satellite system (GNSS) communication module) or a wired communication module 1094 (e.g., a local area network (LAN) communication module or a power line communication (PLC) module). A corresponding one of these communication modules may communicate with the external electronic device via the first network 1098 (e.g., a short-range communication network, such as Bluetooth 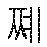 , wireless-fidelity (Wi-Fi) direct, or infrared data association (IrDA)) or the second network 1099 (e.g., a long-range communication network, such as a cellular network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1092 may identify and authenticate the electronic device 1001 in a communication network, such as the first network 1098 or the second network 1099, using subscriber information (e.g., international mobile subscriber identity (IMSI)) stored in the subscriber identification module 1096.

The antenna module 1097 may transmit or receive a signal or power to or from the outside (e.g., the external electronic device) of the electronic device 1001. According to an embodiment, the antenna module 1097 may include an antenna including a radiating element composed of a conductive material or a conductive pattern formed in or on a substrate (e.g., PCB). According to an embodiment, the antenna module 1097 may include a plurality of antennas. In such a case, at least one antenna appropriate for a communication scheme used in the communication network, such as the first network 1098 or the second network 1099, may be selected, for example, by the communication module 1090 (e.g., the wireless communication module 1092) from the plurality of antennas. The signal or the power may then be transmitted or received between the communication module 1090 and the external electronic device via the selected at least one antenna. According to an embodiment, another component (e.g., a radio frequency integrated circuit (RFIC)) other than the radiating element may be additionally formed as part of the antenna module 1097.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1001 and the external electronic device 1004 via the server 1008 coupled with the second network 1099. Each of the electronic devices 1002 and 1004 may be a device of a same type as, or a different type, from the electronic device 1001. According to an embodiment, all or some of operations to be executed at the electronic device 1001 may be executed at one or more of the external electronic devices 1002, 1004, or 1008. For example, if the electronic device 1001 should perform a function or a service automatically, or in response to a request from a user or another device, the electronic device 1001, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1001. The electronic device 1001 may provide the outcome, with or without further processing of the outcome, as at least part of a reply to the request. To that end, a cloud computing, distributed computing, or client-server computing technology may be used, for example.

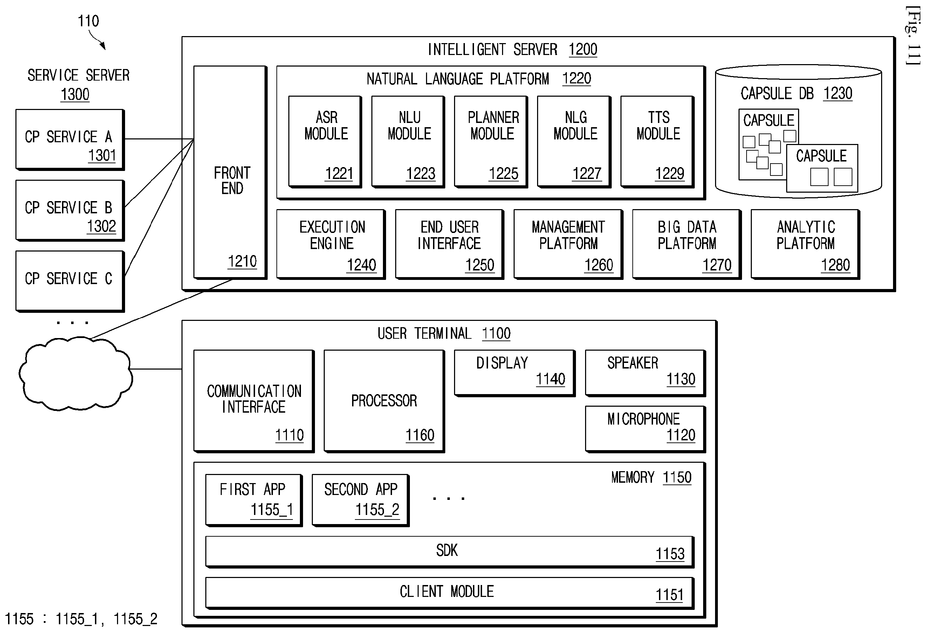

FIG. 11 is a block diagram illustrating an integrated intelligence system, according to an embodiment.

Referring to FIG. 11, according to an embodiment, an integrated intelligence system 110 (e.g., the integrated intelligence system 10 or 20 of FIG. 1) may include a user terminal 1100 (e.g., the electronic device 20 of FIG. 2), an intelligent server 1200 (e.g., the intelligent server 10 of FIG. 1), and a service server 1300.

The user terminal 1100 according to an embodiment may be a terminal device (or an electronic device) capable of connecting to Internet, and may be, for example, a mobile phone, a smartphone, a personal digital assistant (PDA), a notebook computer, TV, a white household appliance, a wearable device, a HMD, or a smart speaker.

According to the illustrated embodiment, the user terminal 1100 may include a communication interface 1110 (e.g., the communication circuit 230 of FIG. 2), a microphone 1120 (e.g., the microphone 220 of FIG. 2), a speaker 1130 (e.g., the speaker 240 of FIG. 2), a display 1140 (e.g., the display 210 of FIG. 2), a memory 1150 (e.g., the memory 250 of FIG. 2), or a processor 1160 (e.g., the processor 260 of FIG. 2). The listed components may be operatively or electrically connected to one another.

The communication interface 1110 according to an embodiment may be configured to transmit or receive data to or from an external device. The microphone 1120 according to an embodiment may receive a sound (e.g., a user utterance) to convert the sound into an electrical signal. The speaker 1130 according to an embodiment may output the electrical signal as a sound (e.g., voice). The display 1140 according to an embodiment may be configured to display an image or a video. The display 1140 according to an embodiment may display the graphic user interface (GUI) of the running app (or an application program).

The memory 1150 according to an embodiment may store a client module 1151, a software development kit (SDK) 1153, and a plurality of apps 1155. The client module 1151 and the SDK 1153 may constitute a framework (or a solution program) for performing general-purposed functions. Furthermore, the client module 1151 or the SDK 1153 may constitute the framework for processing a voice input.

In the memory 1150 according to an embodiment, the plurality of apps 1155 may be a program for performing the specified function. According to an embodiment, the plurality of apps 1155 may include a first app 1155_1 and a second app 1155_2. According to an embodiment, each of the plurality of apps 1155 may include a plurality of actions for performing the specified function. For example, the apps may include an alarm app, a message app, and/or a schedule app. According to an embodiment, the plurality of apps 1155 may be executed by the processor 1160 to sequentially execute at least part of the plurality of actions.

According to an embodiment, the processor 1160 may control overall actions of the user terminal 1100. For example, the processor 1160 may be electrically connected to the communication interface 1110, the microphone 1120, the speaker 1130, and the display 1140 to perform a specified action.

Moreover, the processor 1160 according to an embodiment may execute the program stored in the memory 1150 to perform the specified function. For example, according to an embodiment, the processor 1160 may execute at least one of the client module 1151 or the SDK 1153 to perform the following actions for processing a voice input. The processor 1160 may control the actions of the plurality of apps 1155 via the SDK 1153. The following actions described as the actions of the client module 1151 or the SDK 1153 may be the action by the execution of the processor 1160.

According to an embodiment, the client module 1151 may receive a voice input. For example, the client module 1151 may receive a voice signal corresponding to a user utterance detected via the microphone 1120. The client module 1151 may transmit the received voice input to the intelligent server 1200. The client module 1151 may transmit the state information of the user terminal 1100 together with the received voice input, to the intelligent server 1200. For example, the state information may be the execution state information of an app.

According to an embodiment, the client module 1151 may receive the result corresponding to the received voice input. For example, when the intelligent server 1200 is capable of calculating the result corresponding to the received voice input, the client module 1151 may receive the result corresponding to the received voice input. The client module 1151 may display the received result in the display 1140.

According to an embodiment, the client module 1151 may receive the plan corresponding to the received voice input. The client module 1151 may display the result of executing a plurality of actions of an app in the display 1140 depending on the plan. For example, the client module 1151 may sequentially display the execution result of a plurality of actions in a display. For another example, the user terminal 1100 may display only a part of results (e.g., the result of the last action) of executing a plurality of actions, in the display.

According to an embodiment, the client module 1151 may receive a request for obtaining information necessary to calculate the result corresponding to a voice input, from the intelligent server 1200. According to an embodiment, the client module 1151 may transmit the necessary information to the intelligent server 1200 in response to the request.

According to an embodiment, the client module 1151 may transmit information about the result of executing a plurality of actions depending on the plan, to the intelligent server 1200. The intelligent server 1200 may determine that the received voice input is processed correctly, using the result information.

According to an embodiment, the client module 1151 may include a voice recognition module. According to an embodiment, the client module 1151 may recognize a voice input to perform the restricted function, via the voice recognition module. For example, the client module 1151 may execute an intelligent app (or an intelligent app or an intelligent assistance service) that processes a voice input for performing an organic action, via a specified input (e.g., wake up!).

According to an embodiment, the intelligent server 1200 may receive the information associated with a user's voice input from the user terminal 1100 over a communication network. According to an embodiment, the intelligent server 1200 may change the data associated with the received voice input to text data. According to an embodiment, the intelligent server 1200 may generate a plan for performing a task corresponding to a user voice input, based on the text data.

According to an embodiment, the plan may be generated by an artificial intelligent (AI) system. The AI system may be a rule-based system, or may be a neural network-based system (e.g., a feedforward neural network (FNN) or a recurrent neural network (RNN)). Alternatively, the AI system may be a combination of the above-described systems or an AI system different from the above-described system. According to an embodiment, the plan may be selected from a set of predefined plans or may be generated in real time in response to a user request. For example, the AI system may select at least one plan of the plurality of predefined plans.

According to an embodiment, the intelligent server 1200 may transmit the result according to the generated plan to the user terminal 1100 or may transmit the generated plan to the user terminal 1100. According to an embodiment, the user terminal 1100 may display the result according to the plan, on a display. According to an embodiment, the user terminal 1100 may display the result of executing the action according to the plan, on the display.

The intelligent server 1200 according to an embodiment may include a front end 1210, a natural language platform 1220, a capsule database (DB) 1230, an execution engine 1240, an end user interface 1250, a management platform 1260, a big data platform 1270, or an analytic platform 1280.

According to an embodiment, the front end 1210 may receive a voice input received from the user terminal 1100. The front end 1210 may transmit a response corresponding to the voice input.

According to an embodiment, the natural language platform 1220 may include an automatic speech recognition (ASR) module 1221, a natural language understanding (NLU) module 1223, a planner module 1225, a natural language generator (NLG) module 1227, or a text to speech module (TTS) module 1229.

According to an embodiment, the ASR module 1221 may convert the voice input received from the user terminal 1100 to text data. According to an embodiment, the NLU module 1223 may grasp the intent of the user, using the text data of the voice input. For example, the NLU module 1223 may grasp the intent of the user by performing syntactic analysis or semantic analysis. According to an embodiment, the NLU module 1223 may grasp the meaning of words extracted from the voice input by using linguistic features (e.g., syntactic elements) such as morphemes or phrases and may determine the intent of the user by matching the grasped meaning of the words to the intent.

According to an embodiment, the planner module 1225 may generate the plan by using the intent and a parameter, which are determined by the NLU module 1223. According to an embodiment, the planner module 1225 may determine a plurality of domains necessary to perform a task, based on the determined intent. The planner module 1225 may determine a plurality of actions included in each of the plurality of domains determined based on the intent. According to an embodiment, the planner module 1225 may determine the parameter necessary to perform the determined plurality of actions or the result value output by the execution of the plurality of actions. The parameter and the result value may be defined as a concept of the specified form (or class). As such, the plan may include the plurality of actions and a plurality of concepts determined by the intent of the user. The planner module 1225 may determine the relationship between the plurality of actions and the plurality of concepts stepwise (or hierarchically). For example, the planner module 1225 may determine the execution sequence of the plurality of actions, which are determined based on a user's intent, based on the plurality of concepts. In other words, the planner module 1225 may determine the execution sequence of the plurality of actions, based on the parameters necessary to perform the plurality of actions and the result output by the execution of the plurality of actions. As such, the planner module 1225 may generate a plan including information (e.g., ontology) of the relationship between a plurality of actions and a plurality of concepts. The planner module 1225 may generate the plan, using the information stored in the capsule DB 1230 storing a set of relationships between concepts and actions.

According to an embodiment, the NLG module 1227 may change the specified information into information in the text form. Information changed to the text form may be a form of a natural language utterance. The TTS module 1229 according to an embodiment may change information of the text form to information of a voice form.

According to an embodiment, all or part of the functions of the natural language platform 1220 may be also implemented in the user terminal 1100.

The capsule DB 1230 may store information about the relationship between the actions and the plurality of concepts corresponding to a plurality of domains. According to an embodiment, the capsule may include a plurality of action objects (or action information) and concept objects (or concept information) included in the plan. According to an embodiment, the capsule DB 1230 may store the plurality of capsules in the form of a concept action network (CAN). According to an embodiment, the plurality of capsules may be stored in the function registry included in the capsule DB 1230.

The capsule DB 1230 may include a strategy registry that stores strategy information necessary to determine a plan corresponding to a voice input. The strategy information may include reference information for determining a single plan when there are a plurality of plans corresponding to the voice input. According to an embodiment, the capsule DB 1230 may include a follow up registry that stores the information of the follow-up action for suggesting a follow-up action to the user in the specified context. For example, the follow-up action may include a follow-up utterance. According to an embodiment, the capsule DB 1230 may include a layout registry for storing layout information of the information output via the user terminal 1100. According to an embodiment, the capsule DB 1230 may include a vocabulary registry that stores vocabulary information included in the capsule information. According to an embodiment, the capsule DB 1230 may include a dialog registry that stores information about dialog (or interaction) with the user. The capsule DB 1230 may update the object stored via a developer tool. For example, the developer tool may include a function editor for updating an action object or a concept object. The developer tool may include a vocabulary editor for updating the vocabulary. The developer tool may include a strategy editor that generates and registers a strategy for determining the plan. The developer tool may include a dialog editor that creates a dialog with the user. The developer tool may include a follow up editor capable of activating the follow-up target and editing the follow-up utterance for providing a hint. The follow-up target may be determined based on the currently set target, the preference of the user, or environment condition. The capsule DB 1230 according to an embodiment may be also implemented in the user terminal 1100.

According to an embodiment, the execution engine 1240 may calculate the result, using the generated plan. The end user interface 1250 may transmit the calculated result to the user terminal 1100. As such, the user terminal 1100 may receive the result and may provide the user with the received result. According to an embodiment, the management platform 1260 may manage information used by the intelligent server 1200. According to an embodiment, the big data platform 1270 may collect data of the user. According to an embodiment, the analytic platform 1280 may manage the quality of service (QoS) of the intelligent server 1200. For example, the analytic platform 1280 may manage the component and processing speed (or efficiency) of the intelligent server 1200.

According to an embodiment, the service server 1300 may provide the user terminal 1100 with a specified service (e.g., food order or hotel reservation). According to an embodiment, the service server 1300 may be a server operated by the third party. According to an embodiment, the service server 1300 may provide the intelligent server 1200 with information for generating a plan corresponding to the received voice input. The provided information may be stored in the capsule DB 1230. Furthermore, the service server 1300 may provide the intelligent server 1200 with result information according to the plan.

In the above-described integrated intelligence system 110, the user terminal 1100 may provide the user with various intelligent services in response to a user input. The user input may include, for example, an input through a physical button, a touch input, or a voice input.

According to an embodiment, the user terminal 1100 may provide a voice recognition service via an intelligent app (or a voice recognition app) stored therein. In this case, for example, the user terminal 1100 may recognize the user utterance or the voice input received via the microphone and may provide the user with a service corresponding to the recognized voice input.

According to an embodiment, the user terminal 1100 may perform a specified action, based on the received voice input, independently, or together with the intelligent server and/or the service server. For example, the user terminal 1100 may execute an app corresponding to the received voice input and may perform the specified action via the executed app.

According to an embodiment, when the user terminal 1100 provides a service together with the intelligent server 1200 and/or the service server, the user terminal may detect a user utterance, using the microphone 1120 and may generate a signal (or voice data) corresponding to the detected user utterance. The user terminal may transmit the voice data to the intelligent server 1200, using the communication interface 1110.

According to an embodiment, the intelligent server 1200 may generate a plan for performing a task corresponding to the voice input or the result of performing an action depending on the plan, as the response to the voice input received from the user terminal 1100. For example, the plan may include a plurality of actions for performing the task corresponding to the voice input of the user and a plurality of concepts associated with the plurality of actions. The concept may define a parameter to be input for the execution of the plurality of actions or a result value output by the execution of the plurality of actions. The plan may include relationship information between a plurality of actions and a plurality of concepts.

According to an embodiment, the user terminal 1100 may receive the response, using the communication interface 1110. The user terminal 1100 may output the voice signal generated in user terminal 1100, to the outside using the speaker 1130 or may output an image generated in the user terminal 1100, to the outside using the display 1140.

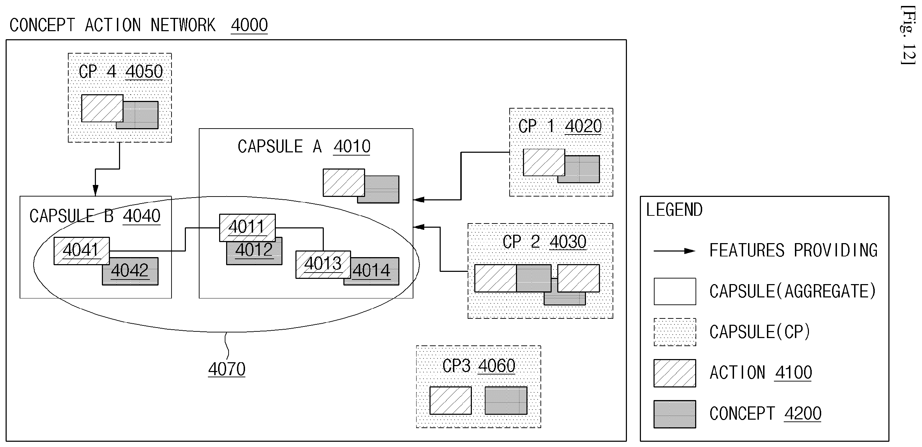

FIG. 12 is a diagram illustrating the form in which relationship information between a concept and an action is stored in a database, according to various embodiments.

The capsule database (e.g., the capsule DB 1230) of the intelligent server 1200 may store a capsule in the form of a concept action network (CAN). The capsule database may store an action for processing a task corresponding to a voice input and a parameter necessary for the action, in the CAN form.

The capsule database may store a plurality capsules capsule A 4010 and capsule B 4040 respectively corresponding to a plurality of domains (e.g., applications). According to an embodiment, a single capsule (e.g., the capsule A 4010) may correspond to one domain (e.g., a location (geo) or an application). Furthermore, at least one service provider (e.g., CP 1 4020 or CP 2 4030) for performing the function for the domain associated with the capsule may correspond to the single capsule. According to an embodiment, the single capsule may include at least one or more actions 4100 and at least one or more concepts 4200 for performing a specified function.

The natural language platform 1220 may generate a plan for performing a task corresponding to the received voice input, using the capsule stored in the capsule database. For example, the planner module 1225 of the natural language platform may generate a plan, using the capsule stored in the capsule database. For example, the planner module 1225 may generate a plan 4070, using actions 4011 and 4013 of the capsule A 4010 and concepts 4012 and 4014 and an action 4041 of the capsule B 4004 and a concept 4042.

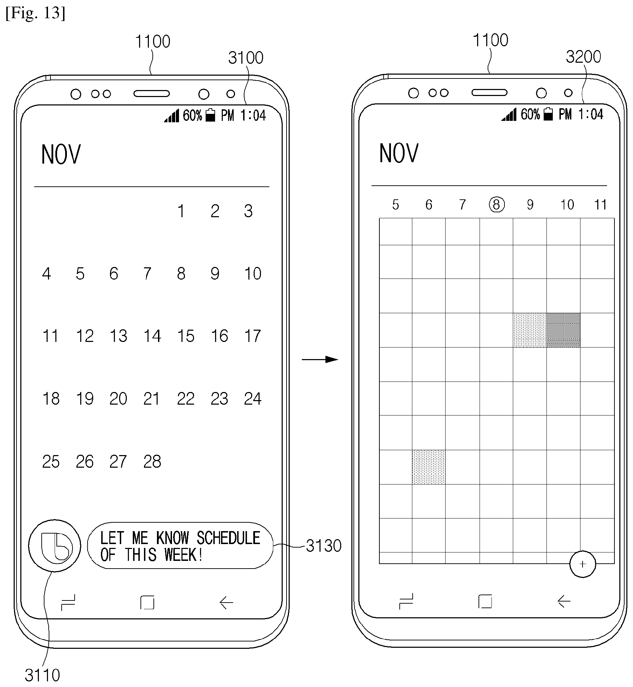

FIG. 13 is a view illustrating a screen in which a user terminal processes a voice input received through an intelligent app, according to various embodiments.

The user terminal 1100 may execute an intelligent app to process a user input through the intelligent server 1200.

According to an embodiment, in screen 3100, when recognizing a specified voice input (e.g., wake up!) or receiving an input via a hardware key (e.g., the dedicated hardware key), the user terminal 1100 may launch an intelligent app for processing a voice input. For example, the user terminal 1100 may launch an intelligent app in a state in which a schedule app is being executed. According to an embodiment, the user terminal 1100 may display an object (e.g., an icon) 3110 corresponding to the intelligent app, in the display 1140. According to an embodiment, the user terminal 1100 may receive a voice input by a user utterance. For example, the user terminal 1100 may receive a voice input saying that "Let me know the schedule of this week!". According to an embodiment, the user terminal 1100 may display a user interface (UI) 3130 (e.g., an input window) of an intelligent app, in which text data of the received voice input is displayed, in a display

According to an embodiment, in screen 3200, the user terminal 1100 may display the result corresponding to the received voice input, in the display. For example, the user terminal 1100 may receive the plan corresponding to the received user input and may display 'the schedule of this week' in the display depending on the plan.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1040) including one or more instructions that are stored in a storage medium (e.g., internal memory 1036 or external memory 1038) that is readable by a machine (e.g., the electronic device 1001). For example, a processor(e.g., the processor 1020) of the machine (e.g., the electronic device 1001) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore 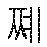 ), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

According to embodiments disclosed in the disclosure, it is possible to provide a voice recognition service capable of providing a plurality of responses respectively corresponding to a plurality of user utterances after one wake-up utterance. Besides, a variety of effects directly or indirectly understood through the disclosure may be provided.

While the disclosure has been shown and described with reference to various embodiments thereof, it will be understood by those skilled in the art that various changes in form and details may be made therein without departing from the scope of the disclosure as defined by the appended claims.

## Claims

1. An electronic device, comprising:
a display (1060);
a microphone (220);
a speaker (240);
a processor (260) operatively connected to the display (1060), the microphone (220), and the speaker (240); and
a memory (250) operatively connected to the processor (260),
wherein the memory (250) stores instructions that, when executed by the processor (260), cause the processor (260) to:
set a time interval of a dialog mode of an intelligent app using a first user interface (520), 'UI', displayed on the display (1060);
set at least one trigger word using a second UI (530, 540) displayed on the display (1060), the at least one trigger word being a specified word for requesting an action;
receive a wake-up utterance for calling a voice-based intelligent assistance service, through the microphone (220);
execute the intelligent app for providing the voice-based intelligent assistance service, in response to receiving the wake-up utterance;
while the intelligent app is executed:
receive a first user utterance through the microphone (220) after the wake-up utterance, using the intelligent app;
perform a first action determined based on the first user utterance, using the intelligent app;
based on that the dialog mode is not activated, terminate the intelligent app after performing the first action; and
based on that the dialog mode is activated, without terminating the intelligent app during the time interval after performing the first action:
receive a second user utterance through the microphone (220) during the time interval after receiving the wake-up utterance;
extract a text for the second user utterance, using the intelligent app; and
based on that the at least one trigger word is included in the text for the second user utterance, perform a second action determined based on the second user utterance, using the intelligent app.

2. The electronic device of claim 1, further comprising a communication circuit, wherein the instructions cause the processor to:
transmit the first user utterance to an intelligent server (10);
receive information associated with execution of the first action according to the first user utterance from the intelligent server (10); and
based on the information associated with execution of the first action, perform the first action.

3. The electronic device of claim 2, wherein the instructions cause the processor to:
based on that the at least one trigger word is included in the text for the second user utterance, transmit the second utterance to an intelligent server (10);
receive information associated with execution of the second action according to the second utterance from the intelligent server (10); and
based on the information associated with execution of the second action, perform the second action.

4. The electronic device of claim 3, wherein the instructions cause the processor to:
based on that the at least one trigger word is not included in the text for the second user utterance, do not transmit the second user utterance to an intelligent server (10).

5. The electronic device of claim 1, wherein the at least one trigger word is associated with at least one of a music category, or a search category.

6. The electronic device of claim 1, wherein the instructions cause the processor to:
identify an utterance speed change, a tone change, and an intonation change based on the first user utterance; and
based on that the utterance speed change, the tone change, and the intonation change satisfy a specified condition, determine whether the at least one trigger word is included in the second user utterance.

7. The electronic device of claim 1, wherein the instructions cause the processor to:
determine whether another trigger word different from the at least one trigger word is included in the second user utterance;
based on that the another trigger word is not included in the second user utterance, perform the second action.

8. The electronic device of claim 1, wherein the instructions cause the processor to:
determine whether a sentence is misrecognized, based on a location of the at least one trigger word in the sentence including the at least one trigger word; and
based on that the sentence is misrecognized, output a sound for requesting a reutterance for the sentence including the at least one trigger word, through the speaker.

## Patentansprüche

1. Elektronische Vorrichtung, die Folgendes umfasst:
eine Anzeige (1060);
ein Mikrofon (220);
einen Lautsprecher (240);
einen Prozessor (260), der betriebsmäßig mit der Anzeige (1060), dem Mikrofon (220) und dem Lautsprecher (240) verbunden ist; und
einen Speicher (250), der betriebsmäßig mit dem Prozessor (260) verbunden ist,
wobei in dem Speicher (250) Anweisungen gespeichert sind, die, wenn sie von dem Prozessor (260) ausgeführt werden, den Prozessor (260) zu Folgendem veranlassen:
Einstellen eines Zeitintervalls eines Dialogmodus einer intelligenten App unter Verwendung einer auf der Anzeige (1060) angezeigten ersten Benutzerschnittstelle (520) (UI, User Interface);
Einstellen zumindest eines Triggerworts unter Verwendung einer auf der Anzeige (1060) angezeigten zweiten UI (530, 540), wobei das zumindest eine Triggerwort ein spezifiziertes Wort zum Anfordern einer Aktion ist;
Empfangen einer Weckäußerung zum Aufrufen eines sprachbasierten intelligenten Assistenzdienstes über das Mikrofon (220);
Ausführen der intelligenten App zum Bereitstellen des sprachbasierten intelligenten Assistenzdienstes als Reaktion auf das Empfangen der Weckäußerung;
während die intelligente App ausgeführt wird:
Empfangen einer ersten Benutzeräußerung über das Mikrofon (220) nach der Weckäußerung unter Verwendung der intelligenten App;
Durchführen einer ersten Aktion, die basierend auf der ersten Benutzeräußerung bestimmt wird, unter Verwendung der intelligenten App;
basierend darauf, dass der Dialogmodus nicht aktiviert ist, Beenden der intelligenten App nach dem Durchführen der ersten Aktion; und
basierend darauf, dass der Dialogmodus aktiviert ist, ohne die intelligente App während des Zeitintervalls nach dem Durchführen der ersten Aktion zu beenden:
Empfangen einer zweiten Benutzeräußerung über das Mikrofon (220) während des Zeitintervalls nach dem Empfangen der Weckäußerung;
Extrahieren eines Textes für die zweite Benutzeräußerung unter Verwendung der intelligenten App; und
basierend darauf, dass das zumindest eine Triggerwort in dem Text für die zweite Benutzeräußerung enthalten ist, Durchführen einer zweiten Aktion, die basierend auf der zweiten Benutzeräußerung bestimmt wird, unter Verwendung der intelligenten App.

2. Elektronische Vorrichtung nach Anspruch 1, ferner umfassend eine Kommunikationsschaltung, wobei die Anweisungen den Prozessor zu Folgendem veranlassen:
Übertragen der ersten Benutzeräußerung an einen intelligenten Server (10);
Empfangen von Informationen von dem intelligenten Server (10), die mit der Ausführung der ersten Aktion verknüpft sind, gemäß der ersten Benutzeräußerung; und
basierend auf den Informationen, die mit der Ausführung der ersten Aktion verknüpft sind, Durchführen der ersten Aktion.

3. Elektronische Vorrichtung nach Anspruch 2, wobei die Anweisungen den Prozessor zu Folgendem veranlassen:
basierend darauf, dass das zumindest eine Triggerwort in dem Text für die zweite Benutzeräußerung enthalten ist, Übertragen der zweiten Äußerung an einen intelligenten Server (10);
Empfangen von Informationen von dem intelligenten Server (10), die mit der Ausführung der zweiten Aktion verknüpft sind, gemäß der zweiten Äußerung; und
basierend auf den Informationen, die mit der Ausführung der zweiten Aktion verknüpft sind, Durchführen der zweiten Aktion.

4. Elektronische Vorrichtung nach Anspruch 3, wobei die Anweisungen den Prozessor zu Folgendem veranlassen:
basierend darauf, dass das zumindest eine Triggerwort nicht in dem Text für die zweite Benutzeräußerung enthalten ist, kein Übertragen der zweiten Benutzeräußerung an einen intelligenten Server (10).

5. Elektronische Vorrichtung nach Anspruch 1, wobei das zumindest eine Triggerwort einer Musikkategorie und/oder einer Suchkategorie zugeordnet ist.

6. Elektronische Vorrichtung nach Anspruch 1, wobei die Anweisungen den Prozessor zu Folgendem veranlassen:
Identifizieren einer Äußerungsgeschwindigkeitsänderung, einer Tonänderung und einer Intonationsänderung basierend auf der ersten Benutzeräußerung; und
basierend darauf, dass die Äußerungsgeschwindigkeitsänderung, die Tonänderung und die Intonationsänderung eine festgelegte Bedingung erfüllen, Bestimmen, ob das zumindest eine Triggerwort in der zweiten Benutzeräußerung enthalten ist.

7. Elektronische Vorrichtung nach Anspruch 1, wobei die Anweisungen den Prozessor zu Folgendem veranlassen:
Bestimmen, ob ein anderes Triggerwort, das sich von dem mindestens einen Triggerwort unterscheidet, in der zweiten Benutzeräußerung enthalten ist;
basierend darauf, dass das andere Triggerwort nicht in der zweiten Benutzeräußerung enthalten ist, Durchführen der zweiten Aktion.

8. Elektronische Vorrichtung nach Anspruch 1, wobei die Anweisungen den Prozessor zu Folgendem veranlassen:
Bestimmen, ob ein Satz falsch erkannt wurde, basierend auf einer Stelle des zumindest einen Triggerworts in dem Satz, der das zumindest eine Triggerwort enthält; und
basierend darauf, dass der Satz falsch erkannt wurde, Ausgeben eines Tons zum Anfordern einer Wiederholung des Satzes, der das zumindest eine Triggerwort enthält, über den Lautsprecher.

## Revendications

1. Appareil électronique, comprenant :
un écran (1060),
un microphone (220),
un haut-parleur (240),
un processeur (260) relié de manière fonctionnelle à l'écran (1060), au microphone (220) et au haut-parleur (240), et
une mémoire (250) reliée de manière fonctionnelle au processeur (260) ;
ladite mémoire (250) contenant des instructions qui, lorsqu'elles sont exécutées par le processeur (260), amènent le processeur (260) à :
définir un intervalle de temps d'un mode de dialogue d'une application intelligente au moyen d'une première interface utilisateur (520) affichée sur l'écran (1060),
définir au moins un mot déclencheur au moyen d'une deuxième interface utilisateur (530, 540) affichée sur l'écran (1060), l'au moins un mot déclencheur étant un mot spécifique visant à demander une action,
recevoir un énoncé de réveil visant à appeler un service d'assistance intelligent à commande vocale, par le biais du microphone (220),
exécuter l'application intelligente pour fournir le service d'assistance intelligente à commande vocale, en réaction à la réception de l'énoncé de réveil,
pendant que l'application intelligente est exécutée :
recevoir un premier énoncé d'utilisateur par le biais du microphone (220) après l'énoncé de réveil, au moyen de l'application intelligente,
réaliser une première action déterminée compte tenu du premier énoncé d'utilisateur, au moyen de l'application intelligente,
si le mode de dialogue n'est pas activé, mettre fin à l'application intelligente après la réalisation de la première action, et
si le mode de dialogue est activé, sans mettre fin à l'application intelligente, pendant l'intervalle de temps suivant la réalisation de la première action :
recevoir un deuxième énoncé d'utilisateur par le biais du microphone (220) pendant l'intervalle de temps suivant la réception de l'énoncé de réveil,
extraire un texte relatif au deuxième énoncé utilisateur, au moyen de l'application intelligente, et
si au moins un mot déclencheur est présent dans le texte relatif au deuxième énoncé d'utilisateur, réaliser une deuxième action déterminée compte tenu du deuxième énoncé d'utilisateur, au moyen de l'application intelligente.

2. Appareil électronique selon la revendication 1, comprenant en outre un circuit de communication et dans lequel les instructions amènent le processeur à :
transmettre le premier énoncé d'utilisateur à un serveur intelligent (10),
recevoir des informations associées à l'exécution de la première action selon le premier énoncé d'utilisateur, à partir du serveur intelligent (10), et
compte tenu des informations associées à l'exécution de la première action, réaliser la première action.

3. Appareil électronique selon la revendication 2, dans lequel les instructions amènent le processeur à :
si l'au moins un mot déclencheur est présent dans le texte relatif au deuxième énoncé d'utilisateur, transmettre le deuxième énoncé à un serveur intelligent (10),
recevoir des informations associées à l'exécution de la deuxième action conformément au deuxième énoncé du serveur intelligent (10), et
compte tenu des informations associées à l'exécution de la deuxième action, réaliser la deuxième action.

4. Appareil électronique selon la revendication 3, dans lequel les instructions amènent le processeur à :
si l'au moins un mot déclencheur n'est pas présent dans le texte relatif au deuxième énoncé d'utilisateur, ne pas transmettre le deuxième énoncé d'utilisateur à un serveur intelligent (10).

5. Appareil électronique selon la revendication 1, dans lequel l'au moins un mot déclencheur est associé à une catégorie ayant trait à la musique et/ou une catégorie ayant trait à une recherche.

6. Appareil électronique selon la revendication 1, dans lequel les instructions amènent le processeur à :
identifier un changement de vitesse d'énonciation, un changement de ton et un changement d'intonation compte tenu du premier énoncé d'utilisateur, et
compte tenu du fait que le changement de vitesse d'énonciation, le changement de ton et le changement d'intonation satisfont une certaine condition, déterminer si l'au moins un mot déclencheur est présent dans le deuxième énoncé utilisateur.

7. Appareil électronique selon la revendication 1, dans lequel les instructions amènent le processeur à :
déterminer si un autre mot déclencheur différent de l'au moins un mot déclencheur est présent dans le deuxième énoncé d'utilisateur,
si l'autre mot déclencheur n'est pas présent dans le deuxième énoncé d'utilisateur, réaliser la deuxième action.

8. Appareil électronique selon la revendication 1, dans lequel les instructions amènent le processeur à :
déterminer si une phrase est mal reconnue, compte tenu de l'emplacement de l'au moins un mot déclencheur dans la phrase, y compris l'au moins un mot déclencheur, et
si la phrase est mal reconnue, émettre un son pour demander une réitération de la phrase comprenant l'au moins un mot déclencheur, par le biais du haut-parleur.
